# EUROPÄISCHE PATENTSCHRIFT

(11) **EP 2 059 571 B1**
(45) Veröffentlichungstag und Bekanntmachung des Hinweises auf die Patenterteilung: **17.11.2010**
(21) Anmeldenummer: 07818334.0
(22) Anmeldetag: 21.09.2007
(51) Int. Cl.: C09D 131/02, C09D 125/00, C09D 133/04, C09D 133/14, C04B 26/02, C04B 28/26

(54) **PUTZE UND FARBEN, COPOLYMERDISPERSIONEN UND DEREN VERWENDUNG**
PLASTERS AND RENDERS AND PAINTS, COPOLYMER DISPERSIONS AND THEIR USE
ENDUITS ET PEINTURES, DISPERSIONS DE COPOLYMÈRES ET LEUR UTILISATION

(30) Priorität: 02.10.2006 DE 102006046860
(43) Veröffentlichungstag der Anmeldung: 20.05.2009
(73) Patentinhaber: Celanese Emulsions GmbH, 61476 Kronberg/Ts. (DE)
(72) Erfinder: CABRERA, Ivan, 63303 Dreieich (DE); FICHTNER, Thomas, 55278 Dalheim (DE); KRIEGER, Stephan, 65719 Hofheim (DE); RATERING, Marc, Theodorus, 65835 Liederbach (DE)
(74) Vertreter: Ackermann, Joachim
(86) Internationale Anmeldenummer: PCT/EP2007/008245
(87) Internationale Veröffentlichungsnummer: WO 2008/040464

(56) Entgegenhaltungen:
- EP-A- 0 565 093
- EP-A- 0 634 283
- EP-A- 1 470 928

## Beschreibung

Die vorliegende Erfindung betrifft neue Zusammensetzungen welche ausgewählte Polymerdispersionen und kolloidales Siliciumdioxid enthalten sowie die Verwendung dieser Zusammensetzungen in Putzen oder Farben.

Die Verwendung von wässrigen Polymerdispersionen als Bindemittel in Putzen oder Farben ist dem Fachmann bekannt.

Auch wässrige Zusammensetzungen enthaltend Polymerdispersionen und kolloidales Siliziumdioxid sind bereits häufig und für unterschiedlichste Anwendungen beschrieben worden.

WO-A-00/23,533 beschreibt Beschichtungszusammensetzungen enthaltend eine Hydrosolemulsion und kolloidales Siliciumdioxid. Die Hydrosolemulsion wird durch Neutralisation einer Kunstharzemulsion mit Alkali hergestellt, wobei die genannte Kunstharzemulsion durch Dispersion von Partikeln aus Carboxyl- und Alkoxysilylgruppen enthaltenden Kunstharzen in Wasser entsteht. Es werden Beschichtungszusammensetzungen zur Herstellung gestrichener Papiere offenbart, nicht jedoch Putz- oder Farbformulierungen. Für die Durchführung der Neutralisation müssen diese bekannten Kunstharzemulsionen vergleichsweise hohe Anteile an einpolymerisierten sauren Monomeren enthalten. Diese Kunststoffemulsionen würden beim Einsatz als Bindemittel den Putz- oder Farbformulierungen aufgrund ihrer Alkalilöslichkeit bzw. -quellbarkeit eine mangelnde Wasserfestigkeit verleihen.

So ist aus der EP-A-1,384,596 eine Beschichtungszusammensetzung für den Tintenstrahldruck bekannt. Diese enthält kolloidales Siliciumdioxid und eine Polymerdispersion, die durch Emulsionspolymerisation von einem radikalisch polymerisierbaren und eine Silylgruppe enthaltenden Monomer sowie einem weiteren damit copolymerisierbaren Monomer in Gegenwart eines Tensids hergestellt werden. Die Polymerdispersion muss mindestens zwei Glasübergangstemperaturen aufweisen. Dieses kann durch Vermischen unterschiedlicher Polymerer mit verschiedenen Glasübergangstemperaturen bewirkt werden oder durch Mehrstufenpolymerisation mit unterschiedlichen Zusammensetzungen von Monomeren. Nach den Ausführungsbeispielen wird kolloidales Siliciumdioxid der Polymerdispersion nach der Emulsionspolymerisation zugesetzt. Die erhaltenen Zusammensetzungen eignen sich hervorragend für den Tintenstrahldruck und zeichen sich neben guten Gebrauchseigenschaften durch erhöhten Glanz und Bewitterungsbeständigkeit der bedruckten Substrate aus. Die Beschichtungszusammensetzung enthält keine Füllstoffe.

In der JP-A-2005-023,189 werden wässrige Beschichtungszusammensetzungen beschrieben, aus denen sich Farben formulieren lassen, welche sich durch eine gute Wasserbeständigkeit, Witterungsbeständigkeit und Beständigkeit gegenüber organischen Basen auszeichnen. Die Zusammensetzungen enthalten durch Emulsionspolymerisation hergestellte Polymerdispersionen, welche sich von (Meth)acrylaten sowie von ethylenisch ungesättigten Carbonsäure und gegebenenfalls weiteren damit copolymerisierbaren Monomeren ableiten. Nach der Emulsionspolymerisation werden der Polymerdispersion Alkoxysilane zugesetzt, die mit dem Emulsionspolymer abreagieren. Danach wird kolloidales Siliziumdioxid zugegeben. Die Beschichtungszusammensetzung enthält keine Füllstoffe und die Polymerdispersion enthält keinen einpolymerisierten Emulgator.

Die JP-A-59-071,316 offenbart eine wasserdispergierbare Zusammensetzung die als Antifoulingfarbe Einsatz findet. Während der Emulsionspolymerisation von (Meth)acrylaten oder Vinylaromaten und copolymerisierbaren Silanmonomeren wird kolloidales Siliziumdioxid zugesetzt. Die Polymerdispersion enthält keinen einpolymerisierten Emulgator.

Aus der JP-A-62-127,365 ist eine Farbformulierung bekannt, die im Innen- und Außenbereich eingesetzt werden kann und deren Filme sich durch hervorragende Permeabilität für Feuchtigkeit sowie durch hohen Glanz auszeichnen. Die Formulierung enthält ein Acrylatpolymer, das zusammen mit kolloidalem Siliziumdioxid emulgiert wird. Die Herstellung der Dispersion erfolgt nicht durch Emulsionspolymerisation.

Die JP-A-61-047,766 beschreibt ein Additiv für ein im Innenraum anzuwendendes Material. Dieses enthält neben einer Polyacrylatdispersion ein kolloidales Siliziumdioxid. Das Acrylatpolymer weist eine niedrige Filmbildungstemperatur auf. Es gibt keinen Hinweis auf Copolymere mit Alkoxysilylgruppen.

In der JP-A-55-054,358 werden Beschichtungen für die Oberflächenbehandlung von leichten Betonteilen beschrieben. Die Zusammensetzungen enthalten neben einer Acrylharzdispersion, kolloidalem Siliziumdioxid, Pigmenten und Polyolefinglykol Calziumbicarbonat mit ausgewähltem Teilchendurchmesser. Es gibt keinen Hinweis auf Copolymere mit Alkoxysilylgruppen.

Die JP-A-57-025,371 beschreibt eine Zusammensetzung für die Behandlung von Baustoffen. Diese wird durch Vermischen einer wässrigen Harz- oder Kautschuksuspension mit kolloidalem Siliziumdioxid hergestellt. Es gibt keinen Hinweis auf Copolymere mit Alkoxysilylgruppen.

In der JP-A-60-219,265 wird ein Verfahren zur Behandlung von Metalloberflächen offenbart. Dabei wird eine Alkoxysilangruppen enthaltende Acrylatdispersion eingesetzt, die durch Emulsionspolymerisation in Gegenwart von kolloidalem Siliziumdioxid hergestellt worden ist. Die Polymerdispersion enthält keinen einpolymerisierten Emulgator.

Die JP-A-02-117,977 beschreibt eine Beschichtungszusammensetzung für Baustoffe. Neben einer Silangruppen enthaltenden ersten nicht-filmbildenden Dispersion wird eine zweite filmbildende Dispersion eingesetzt. Das Polymer der ersten Dispersion weist Alkoxysilylgruppen auf, welche kolloidales Siliziumdioxid binden. Es gibt keine Hinweise auf die Verwendung von Füllstoffen.

In der JP-A-04-008,773 wird eine Antifoulingfarbe beschrieben. Diese wird durch Polymerisation von Alkoxysilangruppen aufweisenden Acrylaten in Gegenwart von kolloidalem Siliziumdioxid hergestellt. Die Polymerdispersion enthält keinen einpolymerisierten Emulgator.

Die JP-A-07-157,709 beschreibt eine wässrige Beschichtungszusammensetzung für unterschiedlichste anorganische Substrate. Es bilden sich Beschichtungen mit hoher Wasser- und Chemikalienresistenz. Die Zusammensetzung wird durch Emulsionspolymerisation von radikalisch polymerisierbaren Monomeren mit copolymerisierbaren Alkoxysilanen herrgestellt. Es entsteht ein sehr feinteiliges Copolymer mit Teilchendurchmessern von weniger als 100nm, dem kolloidales Siliziumdioxid zugefügt wird. Die Polymerdispersion enthält keinen einpolymerisierten Emulgator.

Die JP-A-09-031,297 offenbart eine wasserdispergierbare Zusammensetzung, welche Kern-Hülle-Polymere enthält und sich durch gute Wasserfestigkeit der daraus gebildeten Filme auszeichnet. Die Zusammensetzung kann kolloidales Siliziumdioxid enthalten. Die Hülle der Polymerteilchen leitet sich von (Meth)acrylaten ab, die copolymerisierte Alkoxysilangruppen enthalten. Der Kern der Polymerteilchen leitet sich von vinylaromatischen Monomeren und gegebenenfalls von (Meth)acrylaten ab.

Die JP-A-11-181,210 offenbart eine lagerstabile und härtbare Zusammensetzung. Diese wird durch Zugabe von kolloidalem Metalloxiden, die kein kolloidales Kieselgel sind, zu einer wässrigen Dispersion eines Alkoxysilangruppen enthaltenden (Meth)acylat-Copolymeren erhalten, welches durch Mikrosuspensionspolymerisation hergestellt worden ist.

In der EP-A-989,168 wird eine wässrige Beschichtungszusammensetzung beschrieben. Diese leitet sich ab von einer ausgewählten wässrigen Polymerdispersion, die mit einer ausgewählten Menge an kolloidalem Siliziumdioxid vermischt worden ist. Das Polymer wird dabei durch Lösungspolymerisation hergestellt und anschließend in Wasser dispergiert.

Obwohl in einigen dieser Dokumente die Verwendung von kolloidales Siliziumdioxid enthaltenden Zusammensetzungen im Baubereich beschrieben wird, besteht nach wie vor ein Bedarf an einer Verbesserung dieser Produkte.

Es wurde jetzt überraschenderweise gefunden, dass ausgewählte Polymerdispersionen enthaltend kolloidales Siliziumdioxid und ausgewählte Zusätze sich zu Putzen oder Farben formulieren lassen, die sich durch ausgezeichnete Abriebbeständigkeit, geringe Anschmutzneigung, hohe Wasserdampfdurchlässigkeit, gute Haftung und gute Bewitterungsstabilität auszeichnen. Die erfindungsgemäßen Zusammensetzungen lassen sich zu Putzen oder Farben verarbeiten, die eine nanostrukturierte Oberfläche aufweisen und die sich von herkömmlich erzeugten Oberflächen unterscheiden.

Aufgabe der vorliegenden Erfindung ist somit die Bereitstellung von Formulierungen, die als Putze oder Farben im Innenbereich und insbesondere im Außenbereich eingesetzt werden können und welche die oben genannten vorteilhaften Eigenschaften aufweisen.

Die Erfindung betrifft in einer ersten Ausgestaltung eine Zusammensetzung enthaltend
a) mineralischen Füllstoff, wobei der Anteil von Teilchen mit einem Durchmesser von mindestens 40 µm mindestens 40 Gew. % beträgt,
b) Pigment,
c) kolloidales Siliciumdioxid, und
d) wässerige Kunststoffdispersion, welche ein durch Emulsionspolymerisation hergestelltes Copolymer enthält, das sich ableitet von
   A) mindestens 40 Gew. %, bezogen auf die Gesamtmonomermenge, von Estern α, β-ungesättigter Carbonsäuren, Vinylestern gesättigter Carbonsäuren, vinylaromatischen Monomeren oder Kombinationen von zwei oder mehreren dieser Monomeren,
   B) 0,1 bis 10 Gew. %, bezogen auf die Gesamtmonomermenge, von α, β-ethylenisch ungesättigten Mono- und/oder Dicarbonsäuren, und/oder von α, β-ethylenisch ungesättigten Sulfonsäuren und/oder von α, β-ethylenisch ungesättigten Phosphorsäuren und/oder von α, β-ethylenisch ungesättigten Phosphonsäuren und/oder von Amiden von α, β-ethylenisch ungesättigten Mono- und/oder Dicarbonsäuren,
   C) 0,5 bis 15 Gew. %, bezogen auf die Gesamtmonomermenge, von ethylenisch ungesättigten Monomeren, welche mindestens eine Alkoxysilylgruppe aufweisen,
   D) 0,1 bis 10 Gew. %, bezogen auf die Gesamtmonomermenge, eines ethlyenisch ungesättigten oberflächenaktiven Monomeren enthaltend mindestens eine anionische und/oder nichtionische emulgierende Gruppe, und
   E) gegebenenfalls bis zu 20 Gew. %, bezogen auf die Gesamtmonomermenge, von mit den Monomeren der Gruppen A), B), C) und D) copolymerisierbaren sonstigen Monomeren, mit der Maßgabe, dass anstelle oder zusetzlich zur Copolymerisation des Monomeren C) nach der Emulsionspolymerisation 0,5 bis 15 Gew. %, bezogen auf die Gesamtmonomermenge, eines Monomeren zugegeben wird, das neben mindestens einer Alkoxysilylgruppe mindestens eine Amino-, Merkapto- oder Epoxidgruppe aufweist.

In dieser ersten Ausgestaltung der erfindungsgemäßen Zusammensetzungen, die hauptsächlich als Putze eingesetzt werden, enthalten die Formulierungen neben den Komponenten b), c) und d) mineralische Füllstoffe a) mit einem hohen Anteil an groben Teilchen. Typischerweise enthält der mineralische Füllstoff a) in dieser Ausführungsform einen Anteil von mindestens 40 Gew. % an Teilchen mit einem Durchmesser von mindestens 40 µm.

Komponente a) liegt in dieser Ausführungsform typischerweise in einer Menge von 50 bis 80 Gew. %, bezogen auf die Gesamtformulierung, vor.

Die Erfindung betrifft in einer zweiten Ausgestaltung eine Zusammensetzung enthaltend
a) mineralischen Füllstoff, wobei der mittlere Durchmesser der Teilchen 1 bis 40 µm beträgt, sowie die oben definierten Komponenten b), c) und d).

In dieser zweiten Ausgestaltung der erfindungsgemäßen Zusammensetzungen, die hauptsächlich als Farben eingesetzt werden, enthalten die Formulierungen neben den Komponenten b), c) und d) mineralische Füllstoffe a) ohne Grobteilchenanteile. Typischerweise beträgt der mittlere Durchmesser der Teilchen (ermittelt durch Sedimentationsanalyse gemäß DIN 66115) des mineralischen Füllstoffs a) in dieser Ausführungsform 2 bis 40 µm.

Komponente a) liegt in dieser Ausführungsform typischerweise in einer Menge von 20 bis 60 Gew. %, bezogen auf die Gesamtformulierung, vor.

Als Komponenten a) und b) werden die für den Einsatz in Beschichtungszusammensetzungen an sich bekannten Pigmente und Füllstoffe eingesetzt. Dabei handelt es sich um Feststoffe auf anorganischer und/oder organischer Basis, die vorzugsweise als Pulver eingesetzt werden. Unter Pigmenten werden im Rahmen dieser Beschreibung Feststoffe verstanden, die einen Brechungsindex von größer gleich 1,75 aufweisen. Unter Füllstoffen werden im Rahmen dieser Beschreibung Feststoffe verstanden, die einen Brechungsindex von kleiner als 1,75 aufweisen.

Beispiele für mineralische Füllstoffe sind Erdalkalioxide, Erdalkalicarbonate und/oder ein Silikat-Füllstoffe, insbesondere Calciumcarbonat, Glimmer, Feldspat, Kaolin, Quarzmehle und/oder Quarzkörnungsfraktionen sowie Marmormehle und/oder Marmorkörnungsfraktionen.

Bei Komponente b) kann es sich um beliebige anorganische oder organische Pigmente handeln. Als Komponente b) werden farbgebende und deckende feinteilige Feststoffe eingesetzt. Beispiele dafür sind weiter unter aufgeführt. Bevorzugte Pigmente weisen einen mittleren Durchmesser für das Primärkorn von kleiner gleich 1 µm, vorzugsweise von 0,1 bis 0,5 µm auf, ermittelt gemäß Sedimentationsanalyse gemäß DIN 66115.

Beispiele für anorganische Pigmente sind Metalloxide, wie Titandioxid, Eisenoxid oder Zinkoxid, insbesondere Titandioxid .

Beispiele für organische Pigmente sind Phthalocyanine, insbesondere Phthalocyaninblau, oder Diarylpigmente, Azopigmente oder Chinacridonpigmente.

Komponente b) liegt in der ersten Ausführungsform der Erfindung (Putze) typischerweise in einer Menge von 1 bis 25 Gew. %, bezogen auf die Gesamtformulierung, vor, insbesondere in einer Menge von 2 bis 15 Gew. %.

Komponente b) liegt in der zweiten Ausführungsform der Erfindung (Farben) typischer-weise in einer Menge von 1 bis 50 Gew. %, bezogen auf die Gesamtformulierung, vor, insbesondere in einer Menge von 2 bis 20 Gew. %.

Bei Komponente c) kann es sich um beliebige kolloidale Siliciumdioxide handeln. Für die vorliegende Erfindung geeignetes kolloidales Siliciumdioxd ist bevorzugt eine wässerige kolloidale Dispersion oder Suspension ultrafeiner Siliciumdioxidteilchen. Der Teilchendurchmesser primärer Teilchen in dieser Dispersion oder Suspension beträgt bevorzugt 2 bis 100 nm und die primären Teilchen sind kugelförmig.

Das erfindungsgemäß eingesetzte kolloidale Siliciumdioxid c) ist vorzugsweise ein amorphes Siliciumdioxid und ist entweder vom anionischen oder vom kationischen Typ (= anionische oder kationische Oberflächenladungen der Teilchen, welche durch entsprechende Gegenionen kompensiert werden). Bevorzugt eingesetzt werden Dispersionen, bei denen die Teilchen durch anionische Oberflächenladungen stabilisiert sind und Alkali- oder Ammoniumgegenionen, insbesondere Natrium-, Kalium- oder Ammoniumgegenionen, enthalten. Ferner kann das kolloidale Siliciumdioxid ein monodisperses oder ein polydisperses Siliciumdioxid sein.

Kolloidales Siliciumdioxid ist im Handel erhältlich, beispielsweise unter den Handelsnamen Klebosol^{®}, Köstrosol^{®} oder Levasil^{®}.

Das kolloidale Siliciumdioxid wird typischerweise in einer Menge von 5 bis 200 Gewichtsteilen, bezogen auf die Menge an Copolymer, verwendet. Wird das kolloidale Siliciumdioxid in einer Menge von 5 Gewichtsteilen oder in einer größeren Menge verwendet, besitzt der diese Kunststoffdisperion enthaltende Putz oder Farbe die oben beschriebenen vorteilhaften Eigenschaften.

Verwendet man das kolloidale Siliciumdioxid in einer Menge von 200 Gewichtsteilen oder in einer geringeren Menge, so hat der erfindungsgemäßen Putz oder die Farbe gute filmbildende Eigenschaften und ist daher zum Einsatz im Baubereich gut geeignet.

Komponente c) kann bereits bei der Emulsionspolymerisation bei der Herstellung der wässerigen Polymerdispersion d) zugegeben sein. Diese Ausführungsform ist jedoch weniger bevorzugt. Üblicherweise wird Komponente c) der wässerigen Polymerdispersion nach deren Herstellung zugesetzt und/oder bei der Herstellung der Putz- oder Farbformulierung. Besonders bevorzugt ist die Zugabe des kolloidalen Siliziumdioxids nach der Herstellung der Polymerdispersion.

Bei der Modifikation der wässerigen Polymerdispersion d) durch Nachgabe von kolloidalem Siliziumdioxid c) hat sich überraschenderweise herausgestellt, dass sich die erhaltenen Zusammensetzungen im Vergleich zu Formulierungen, bei denen das kolloidale Siliziumdioxid bereits während der Emulsionspolymerisation anwesend ist deutlich unterscheiden, nämlich durch geringere Koagulatanteile, vergrößerte Lagerstabilität und die Möglichkeit, höhere Feststoffgehalte einzustellen.

Bevorzugte Zusammensetzungen enthalten neben den Komponenten a) bis d) zusätzlich wasserlösliches Silikat e) und/oder Silikonharz f).

Als wasserlösliche Silikate e) können sämtliche dem Fachmann an sich bekannten Materialien eingesetzt werden. Beispiele dafür sind wasserlösliches Alkali-Wasserglas, insbesondere Natrium- oder Kaliumwasserglas.

Als Silikonharze f) können ebenfalls sämtliche dem Fachmann an sich bekannten Materialien eingesetzt werden. Beispiele dafür sind Poly-(dialkylsiloxane), insbesondere Poly-(dimethylsiloxane). Dabei kann es sich um vernetzende oder um nicht-vernetzende Systeme handeln.

Komponente e) liegt typischerweise in einer Menge von 0 bis 40 Gew. %, bezogen auf die Gesamtformulierung, vor, insbesondere in einer Menge von 10 bis 30 Gew. %.

Komponente f) liegt typischerweise in einer Menge von 0 bis 10 Gew. %, bezogen auf die Gesamtformulierung, vor, insbesondere in einer Menge von 4 bis 8 Gew. %.

Die erfindungsgemäß eingesetzte Kunststoffdispersion d) wird durch Emulsionspolymerisation in an sich bekannter Weise hergestellt. Dabei entstehen wässrige Dispersionen von Kunstharzteilchen, die neben Carboxylgruppen und/oder Sulfonsäuregruppen und/oder Phosphorsäuregruppen und/oder Phosphonsäuregruppen auch Alkoxysilylgruppen aufweisen.

Erfindungsgemäß kann die Kunststoffdispersion d) durch Emulsionspolymerisation mindestens eines Monomeren der Gruppe A), vorzugsweise eines Esters der Acrylsäure, der Methacrylsäure, der Crotonsäure, der Maleinsäure, der Itaconsäure, der Citraconsäure und der Fumarsäure, mit mindestens einem Monomeren der Gruppe B), vorzugsweise einer ethylenisch ungesättigten Carbonsäure, mit mindestens einem Monomeren der Gruppe C), vorzugsweise eines Organoalkoxysilans mit einer radikal polymerisierbaren, ungesättigten Bindung und mit mindestens einem Monomeren der Gruppe D) hergestellt werden. Alternativ kann die Kunststoffdispersion auch durch Emulsionspolymerisation mindestens eines Monomeren der Gruppe A) mit mindestens einem Monomeren der Gruppe B) und der Gruppe D) und durch Mischen des dabei entstandenen Copolymers mit einem Organoalkoxysilan, das anstelle einer radikalisch polymerisierbaren, ungesättigten Bindung mindestens eine Amino-, Merkapto- oder Epoxidgruppe enthält, gewonnen werden.

Die Durchführung einer Emulsionspolymerisation mit diesen Methoden führt zur Gewinnung einer Kunststoffdispersion, bei der die Kunststoffteilchen, die eine Carboxylgruppe, eine Alkoxysilylgruppe und eine emulgierende Gruppe enthalten, in Wasser dispergiert sind.

Die Auswahl der eingesetzten Monomerkombinationen erfolgt so, dass die für den vorgesehenen Anwendungszweck gewünschte(n) Glasübergangstemperatur(en) erhalten werden. Dem Fachmann sind die Auswahlkriterien dafür bekannt.

Üblicherweise werden Copolymerisate hergestellt, deren Glasübergangstemperaturen im Bereich von -50 bis + 50°C, vorzugsweise -30 bis +30°C, liegen.

Die Glasübergangstemperaturen werden für die Zwecke der vorliegenden Beschreibung mittels Differential-Scanning-Calorimetrie (DSC) nach DIN 53765 bestimmt. Dazu wurde das Muster bei 130°C 1 Stunde lang getrocknet, gekühlt und sodann geheizt. Dieses erfolgt mit einer Aufheizgeschwindigkeit von 10 K/Minute.

Erfindungsgemäß bildet das Monomer der Gruppe A), nämlich ein (Meth)acrylat, ein Vinylester einer gesättigten Carbonsäure und/oder ein vinylaromatisches Monomer das Gerüst des Kunststoffes, das für die Herstellung der oben beschriebenen Kunststoffdispersion verwendet wird.

Bevorzugte Monomere der Gruppe A) sind (Meth)acrylsäurealkylester (also Alkylester der Acrylsäure oder der Methacrylsäure). Beispiele dafür sind Methylacrylat, Ethylacrylat, Propylacrylat, Butylacrylat, 2-Ethylhexylacrylat, Methylmethacrylat, Ethylmethacrylat, Propylmethacrylat, n-Butylmethacrylat, t-Butylmethacrylat, Isobutylmethacrylat, 2-Ethylhexylmethacrylat, Cyclohexylmethacrylat und Cyclohexylacrylat. Diese Alkylester können alleine oder in Form einer Kombination von zwei oder mehreren Estern verwendet werden. Zusätzlich oder anstelle davon können Hydroxylgruppen-haltige oder Epoxidgruppen-haltige (Meth)acrylsäure-alkylester eingesetzt werden. Kommt als (Meth)acrylsäure-alkylester ein Hydroxylgruppen-haltiger bzw. ein Epoxidgruppenhaltiger (Meth)acrylsäurealkylester zur Anwendung, so enthält die damit hergestellte Kunststoffdisperson zusätzlich zur Carboxyl- und Alkoxysilylgruppe auch eine Hydroxylgruppe bzw. eine Epoxidgruppe.

Zu den Beispielen für Hydroxylgruppen-haltige (Meth)acrylsäurealkylester gehören Hydroxymethylmethacrylat, Hydroxyethylacrylat, Hydroxypropylmethacrylat, Hydroxypropylacrylat, Hydroxybutylmethacrylat und Hydroxybutylacrylat. Diese Alkylester können alleine oder in Form einer Kombination von zwei oder mehreren Estern verwendet werden.

Zu den Beispielen für Epoxidgruppen-haltige (Meth)acrylsäurealkylester gehören Glycidylmethacrylat oder Glycidylacrylat.

Zusätzlich zu oder anstelle der (Meth)acrylate können als Hauptmonomere Vinylester von gesättigten Carbonsäuren eingesetzt werden. Dabei handelt es sich in der Regel um Vinylester von gesättigten Carbonsäuren mit 1 bis 18 Kohlenstoffatomen.

Beispiele dafür sind Vinylester von Carbonsäuren mit 1 bis 4 Kohlenstoffatomen, wie zum Beispiel Vinylformiat, Vinylacetat, Vinylpropionat, Vinylisobutyrat, Vinylpivalat und Vinyl-2-ethylhexanoat; oder Vinylester von gesättigten, verzweigten Monocarbonsäuren mit 9, 10 oder 11 Kohlenstoffatomen im Säurerest (^{®}Versaticsäuren); oder Vinylester von längerkettigen, gesättigten und ungesättigten Fettsäuren, beispielsweise Vinylester von Fettsäuren mit 8 bis 18 Kohlenstoffatomen, wie zum Beispiel Vinyllaurat und Vinylstearat; oder Vinylester der Benzoesäure oder der p-tert.-Butylbenzoesäure sowie Gemische derselben, wie zum Beispiel Gemische aus Vinylacetat und einer Versaticsäure oder aus Vinylacetat und Vinyllaurat. Insbesondere bevorzugt ist Vinylacetat.

Zusätzlich zu oder anstelle der (Meth)acrylate und/oder der Vinylester können als Hauptmonomere vinylaromatische Kohlenwasserstoffe eingesetzt werden. Beispiele dafür sind Styrol, Vinyltoluol und alpha-Methylstyrol.

Neben diesen Hauptmonomeren werden zur Herstellung der Kunststoffdispersion Monomere der Gruppe B), nämlich radikalisch polymerisierbare Carbonsäuren, deren Amide, Sulfonsäuren, Phosphorsäuren, Phosphonsäuren oder deren Gemische eingesetzt.

Vorzugsweise verwendet man als Monomere der Gruppe B) radikalisch polymerisierbare Carbonsäuren, Sulfonsäuren, Phosphorsäuren, Phosphonsäuren oder deren Gemische.

Zu den Monomeren der Gruppe B) zählen solche Verbindungen, die mindestens eine Carbonsäure-, Carbonsäureamid-, Sulfonsäure-, Phosphorsäure- oder Phosphonsäuregruppe in direkter Nachbarschaft zur Doppelbindungseinheit tragen oder aber über einen Spacer mit dieser verbunden sind. Als Beispiele seien genannt: ethylenisch ungesättigte C₃-C₈-Monocarbonsäuren, ethylenisch ungesättigte C₄-C₈-Dicarbonsäuren sowie deren Anhydride oder Amide, und Halbester von ethylenisch ungesättigten C₄-C₈-Dicarbonsäuren. Üblicherweise weisen die Monomeren der Gruppe B) bis zu acht Kohlenstoffatomen auf, insbesondere 3 bis 8 Kohlenstoffatome.

Bevorzugt sind ethylenisch ungesättigte C₃-C₈-Monocarbonsäuren, wie Acrylsäure, Methacrylsäure und Crotonsäure sowie deren Anhydride und Amide; ethylenisch ungesättigte C₄-C₈-Dicarbonsäuren, wie Maleinsäure, Fumarsäure, Itaconsäure und Citraconsäure, sowie deren Mono- oder Bisamide und Halbester mit C₁-C₁₂-Alkanolen, vorzugsweise C₁-C₄-Alkanolen, wie zum Beispiel Monomethylmaleinat und Mono-n-butylmaleinat. Weitere bevorzugte, ethylenisch ungesättigte, ionische Monomere sind ethylenisch ungesättigte Sulfonsäuren, insbesondere ethylenisch ungesättigte Sulfonsäuren mit 2-8 Kohlenstoffatomen, wie Vinylsulfonsäure, 2-Acrylamido-2-methyl-propansulfonsäure, 2-Acryloxyethansulfonsäure und 2-Methacryloxyethan-sulfonsäure, 3-Acryloxy- und 3-Methacryloxypropansulfonsäure, Vinylbenzolsulfonsäure, sowie ethylenisch ungesättigte Phosphonsäuren mit 2-8 Kohlenstoffatomen, wie Vinylphosphonsäure.

Außerdem können neben den oder anstelle der genannten Säuren auch deren Salze eingesetzt werden, vorzugsweise deren Alkalimetall- oder Ammoniumsalze und besonders bevorzugt deren Natriumsalze, wie beispielsweise die Natriumsalze der Vinylsulfonsäure und der 2-Acrylamidopropansulfonsäure.

Weitere Beispiele für Monomere der Gruppe B) sind Amide von ethylenisch ungesättigten Carbonsäuren, insbesondere Methacrylamid, Acrylamid, Crotonsäureamid, Fumarsäuremono- oder -diamid, Maleinsäuremono- oder diamid, Itaconsäuremono- oder -diamid und Citraconsäuremono- oder diamid. Neben den Amiden können auch deren N-funktionalisierte Derivate, wie N-Alkyl- oder N,N-Dialkylamide eingesetzt werden. Bevorzugt sind die nicht-funktionalisierten Derivate.

Neben den Hauptmonomeren der Gruppe A) und den Monomeren der Gruppe B) werden zur Herstellung der Kunststoffdispersion vorzugsweise Monomere der Gruppe C), nämlich ethylenisch ungesättigte Monomeren, welche mindestens eine Alkoxysilylgruppe aufweisen, eingesetzt. Anstelle von Monomeren der Gruppe C) oder zusätzlich zu Monomeren der Gruppe C) kann dem Copolymeren nach der Emulsionspolymerisation ein Monomer zugegeben werden, das neben mindestens einer Alkoxysilylgruppe mindestens eine Amino-, Merkapto- oder Epoxidgruppe aufweist.

Beispiele für Organoalkoxysilane sind Verbindungen mit einer ethylenisch ungesättigten, d.h. mit einer radikalpolymerisierbaren, ungesättigten Bindung, die mindestens eine Alkoxysilangruppe aufweisen.

Dabei handelt es sich um Verbindungen, die während der Polymerisation in das Copolymere eingebaut werden; daneben können aber auch Organoalkoxysilane eingesetzt werden, die neben dem Polymeren als separate Komponente in der Dispersion vorliegen.

Zu den erfindungsgemäß verwendbaren Organoalkoxysilanen zählen bevorzugt Verbindungen der allgemeinen Formel I oder II
a) ein Organofunktionelles Silan 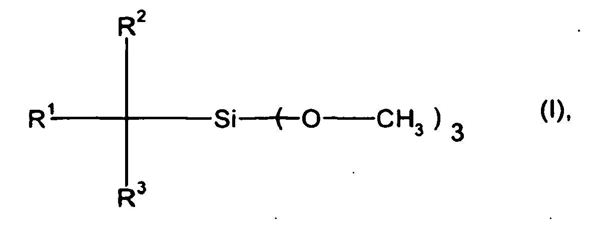 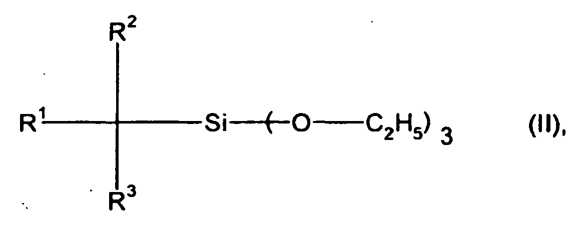 worin R¹ -(CH₂)ₙ-NH-R⁴, -(CH₂)ₙ-NH-[(CH₂)ₘ-NH]ₒ-R⁴ oder -(CH₂)ₙ-O-R⁵, -(CH₂)ₙ-CH=CH₂ oder -(CH₂)ₙ-S-R⁵ bedeutet,
   R² Wasserstoff, -(CH₂)ₙ-CH₃ oder R¹ ist,
   R³ Wasserstoff, -(CH₂)ₙ-CH₃ oder R² ist,
   R⁴ Wasserstoff, -(CH₂)ₙ-CH₃ oder -CO-(CH₂)ₘ-CH₃ bedeutet, und
   R⁵ Wasserstoff, -(CH₂-CH₂-O)ₘ-R⁴ oder 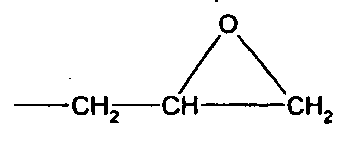 ist, wobei n und m jeweils unabhängig voneinander eine ganze Zahl zwischen 0 und 12 und o eine ganze Zahl zwischen 0 und 5 ist.

Weitere bevorzugt eingesetzte Silane sind mehrfach funktionelle Silane. Dazu zählen insbesondere Verbindungen, die neben mindestens einer Silangruppe mindestens eine primäre, sekundäre oder tertiäre Aminogruppe, mindestens eine Alkylthiogruppe oder Sulfhydrylgruppe oder mindestens eine Epoxidgruppe aufweisen.

Besonders bevorzugte Verbindungen aus dieser Gruppe sind Verbindungen der Formeln III, IV, V, VI, VII oder VIII

(R⁶-Oh-Si-(CH₂)ₚ-NH-(CH₂)ₚ-Si-(O-R⁶)₃ (III),

(R⁶-O)₃-Si-(CH₂)ₚ-N[-(CH₂)ₚ-Si-(O-R⁶]₂ (IV),

(R⁶-O)₃-Si-(CH₂)ₚ-S-(CH₂)ₚ-Si-(O-R⁶)₃ (V),

(R⁶-O)₃-Si-(CH₂)ₚ-O-R⁷ (VI),

(R⁶-O)₃-Si-(CH₂)ₚ-S-R⁸ (VII),

(R⁶-O)₃-Si-(CH₂)ₚ-NR⁹R¹⁰ (VIII),

worin R⁶ unabhängig voneinander Wasserstoff oder C₁-C₆-Alkyl, vorzugsweise Methyl, Ethyl oder Propyl, bedeutet,
R⁷ Wasserstoff, C₁-C₆-Alkyl oder ein Glycidylrest (1,2-Epoxypropyl) ist,
R⁸ Wasserstoff oder C₁-C₆-Alkyl ist,
R⁹ und R¹⁰ unabhängig voneinander Wasserstoff oder C₁-C₆-Alkyl bedeutenn und p eine ganze Zahl zwischen 1 und 12 ist.

Besonders bevorzugte Silane der Formeln III, IV und V sind die Verbindungen:

(CH₃-O)₃-Si-(CH₂)ₚ-S-(CH₂)ₚ-Si-(O-CH₃)₃,

(CH₃-CH₂-O)₃-Si-(CH₂)ₚ-NH-(CH₂)ₚ-Si-(O-CH₂-CH₃)₃,

(CH₃-O)₃-Si-(CH₂)ₚ-NH-(CH₂)ₚ-Si-(O-CH₃)₃,

(CH₃-CH₂-O)₃-Si-(CH₂)ₚ-N[-(CH₂)ₚ-Si-(O-CH₂-CH₃)₃]₂,

(CH₃-O)₃-Si-(CH₂)ₚ-N[-(CH₂)ₚ-Si-(O-CH₃)₃]₂

(CH₃-CH₂-O)₃-Si-(CH₂)ₚ-S-(CH₂)ₚ-Si-(O-CH₂-CH₃)₃,

(CH₃-O)₃-Si-(CH₂)ₚ-S-(CH₂₎p-Si-(O-CH₃)₃,

worin p die oben definierte Bedeutung besitzt.
Weitere bevorzugt eingesetzte Silane sind di-, tri- oder oligomere Silane.

Die Silane können als einzelne Verbindungen oder als Mischungen eingesetzt werden.

Als Beispiele für Silanverbindungen der oben genannten Type, die kommerziell erhältlich sind, seien genannt:
Silane des Handelsnamens Dynasylan^{®} (Degussa), des Handelsnamens Geniosil^{®} (Wacker) oder des Handelsnamens Silquest^{®} (GE Silicones).

Zu Organosilanen, die in das Polymere eingebaut werden, zählen ethylenisch ungesättigte und Alkoxysilangruppen enthaltende Monomere der allgemeinen Formel R¹¹Si(CH₃)₀-₂(OR¹²)₃₋₁, wobei R¹¹ die Bedeutung CH₂=CR¹³-(CH₂)₀₋₁ oder CH₂=CR¹³CO₂-(CH₂)₁₋₃ hat, R¹² ein unverzweigter oder verzweigter, gegebenenfalls substituierter Alkylrest mit 1 bis 12 C-Atomen ist, der gegebenenfalls durch eine Ethergruppe unterbrochen sein kann, und R¹³ für Wasserstoff oder Methyl steht.

Bevorzugt sind Silane der Formeln CH₂=CR¹³-(CH₂)₀₋₁Si(CH₃)₀₋₁(OR¹²)₃₋₂ und CH₂=CR⁹CO₂-(CH₂)₃Si(CH₃)₀₋₁(OR⁸)₃₋₂, wobei R¹² ein unverzweigter oder verzweigter, gegebenenfalls substituierter Alkylrest mit 1 bis 12 C-Atomen ist und R¹³ für Wasserstoff oder Methyl steht.

Besonders bevorzugte Silane sind Vinylmethyl-dimethoxy-silan, Vinylmethyldiethoxy-silan, Vinylmethyl-di-n-propoxy-silan, Vinylmethyl-di-iso-propoxy-silan, Vinylmethyl-di-n-butoxy-silan, Vinylmethyl-di-sec.-butoxy-silan, Vinylmethyl-di-tert.-butoxy-silan, Vinylmethyl-di-(2-methoxyisopropyloxy)-silan und Vinylmethyldioctyloxy-silan.

Insbesondere bevorzugt sind Silane der Formel CH₂=CR¹³-(CH₂)₀₋₁Si(OR¹⁴)₃ und CH₂=CR²CO₂-(CH₂)₃Si(OR¹)₃, wobei R¹⁴ für einen verzweigten oder unverzweigten Alkylrest mit 1 bis 4 C-Atomen und R¹³ für Wasserstoff oder Methyl steht.

Beispiele hierfür sind γ-(Meth)acryloxypropyl-tris-(2-methoxyethoxy)-silan, γ-(Meth)acryloxypropyl-tris-methoxy-silan, γ-(Meth)acryloxypropyl-tris-ethoxy-silan, γ-(Meth)acryloxypropyl-tris-n-propoxy-silan, γ-(Meth)acryloxypropyl-tris-iso-propoxy-silan, γ-(Meth)acryloxypropyl-tris-butoxy-silan, γ-Acryloxypropyl-tris-(2-methoxyethoxy)-silan, γ-Acryloxypropyl-tris-methoxy-silan, γ-Acryloxypropyl-tris-ethoxy-silan, γ-Acryloxypropyl-tris-n-propoxy-silan, γ-Acryloxypropyl-tris-iso-propoxy-silan, γ-Acryloxypropyl-tris-butoxy-silan, sowie Vinyl-tris-(2-methoxyethoxy)-silan, Vinyl-tris-methoxy-silan, Vinyl-tris-ethoxy-silan, Vinyl-tris-n-propoxy-silan, Vinyl-trisiso-propoxy-silan und Vinyl-tris-butoxy-silan. Die genannten Silanverbindungen können gegebenenfalls auch in Form ihrer (Teil)hydrolysate eingesetzt werden.

Besonders bevorzugt eingesetzte Silane sind primäre und sekundäre Aminoalkylethoxysilane, Bis(3-triethoxysilylpropyl)amin, trifunktionelles Propyltrimethoxysilan [NH₂-(CH₂)₂-NH-(CH₂)₂-NH-(CH₂)₃-Si(OCH₃)₃], Vinyltriethoxysilan [CH₂=CH-Si(OC₂Hₛ)₃], Vinyltrimethoxysilan [CH₂=CH-Si(OCH₃)₃], 3-Glycidyloxypropyltriethoxysilan, 3-Mercaptopropyltrimethoxysilan, 3-Aminopropyltrimethoxysilan, oligomeres Diaminosilansystem, Glycidyl-trimethoxy funktionelles Silan, Vinyl-triethoxy funktionelles Silan, Glycidyl-triethoxy funktionelles Silan, Vinyltris(2-methoxyethoxy)silan, (3-Glycidoxypropyl)-trimethoxysilan, N-(2-Aminoethyl)(3-aminopropyl)trimethoxy-silan, (3-Aminopropyl)triethoxysilan, N-(2-Aminoethyl)(3-aminopropyl)-methyldimethoxysilan, (3-Aminopropyl)-trimethoxysilan, (Methacryloxymethyl)methyl-dimethoxysilan, (Methacryloxymethyl)trimethoxysilan und/oder (Methacryloxy-methyl)-methyldiethoxysilan.

Neben den Hauptmonomeren der Gruppe A) und den Monomeren der Gruppe B), den Monomeren der Gruppe C) werden zur Herstellung der Kunststoffdispersion Monomere der Gruppe D), nämlich ethlyenisch ungesättigte oberflächenaktive Monomeren, die mindestens eine anionische und/oder nichtionische Gruppe enthalten, eingesetzt.

Bei diesen Emulgatoren handelt es sich um Tenside, die während der Emulsionspolymerisation in das Copolymer eingebaut werden können. Üblicherweise weisen die Monomeren der Gruppe D) mehr als acht Kohlenstoffatomen auf.

Die Monomeren der Gruppe D) weisen mindestens eine hydrophile Gruppe auf, wobei die hydrophile Gruppe nichtionisch sein kann, beispielsweise eine Polyglykolgruppe, oder anionisch sein kann, beispielsweise eine Sulfat-, Sulfonat-Phosphat- oder Phosphonatgruppe. Bevorzugt weisen die Monomeren der Gruppe D) zusätzlich mindestens eine hydrophobe Gruppe auf, wobei die hydrophobe Gruppe beispielsweise eine Alkyl-, Cycloalkyl-, Alkenyl-, Aryl- oder Acyl-Gruppe sein kann, und besitzen mindestens 9 Kohlenstoffatome.

Vorzugsweise weisen die Monomeren der Gruppe D) eine Vinylgruppe, eine Allylgruppe oder einen Rest einer ethylenisch ungesättigten Säure auf, wie einen Acrylsäure-, Methacrylsäure-, Crotonsäure- Itaconsäure- oder Maleinsäurerest, und haben mindestens 9 Kohlenstoffatome.

Vorzugsweise weisen die Monomeren der Gruppe D) ein bis drei nichtionische oder insbesondere anionische emulgierende Gruppen auf. Als emulgierende Gruppen kommen besonders bevorzugt Polyalkylenglykolgruppen in Frage, die insbesondere anionisch funktionalisiert sind, beispielsweise mit einer Sulfat- oder Sulfonsäuregruppe.

Besonders bevorzugte Monomere sind Verbindungen der allgemeinen Formeln X, XI, XII, XIII, XIV, XV, XVI, XVII, XVIII, XIX, XX, XXI, XXII, XXIII, XXIV, XXV, XXVI, XXVII, XXVIII, XXIX, XXX, XXXI, XXXII und XXXIII

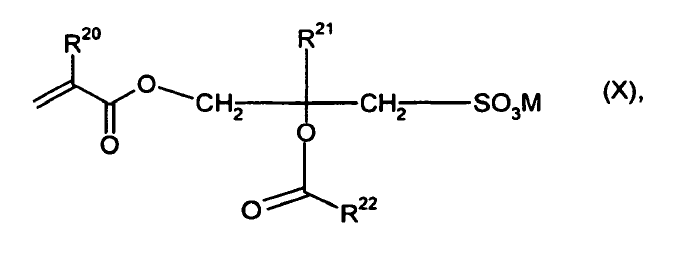

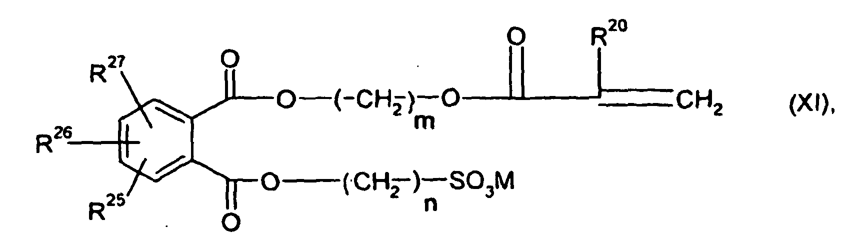

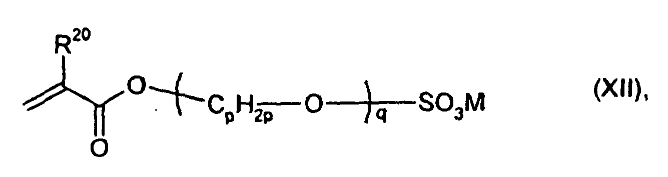

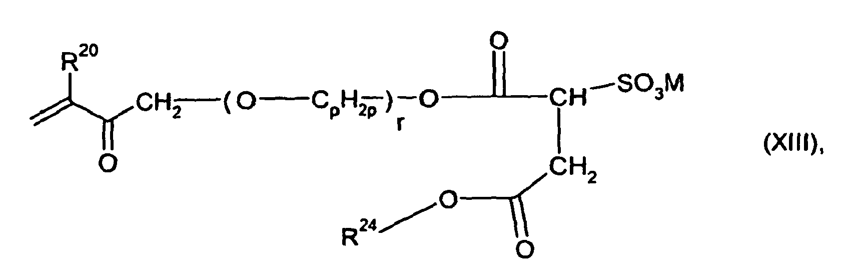

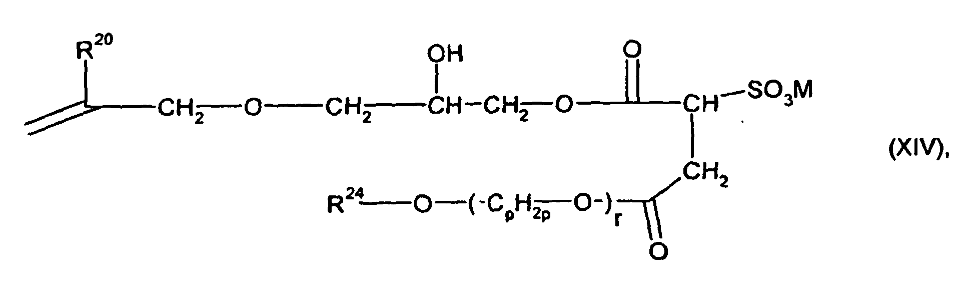

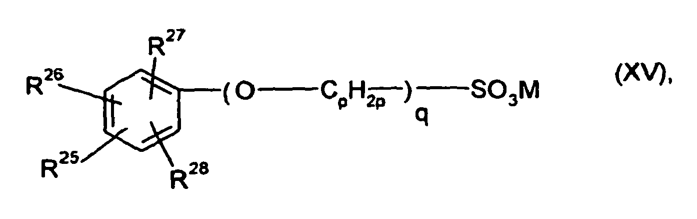

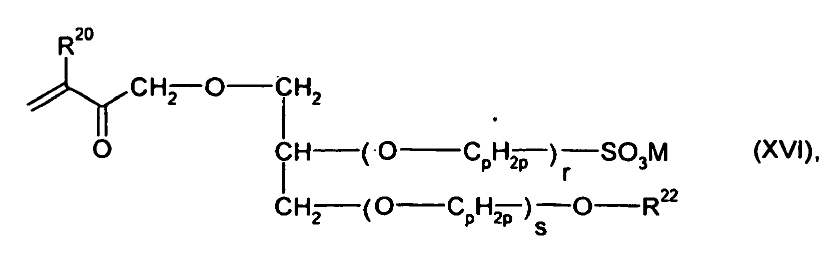

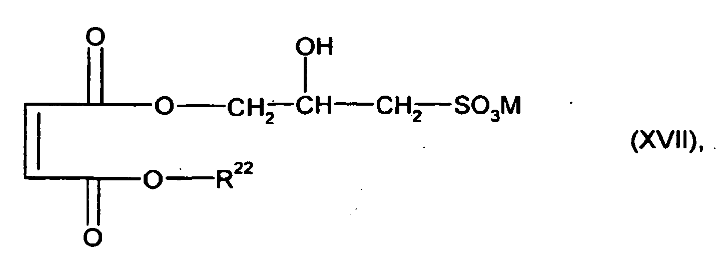

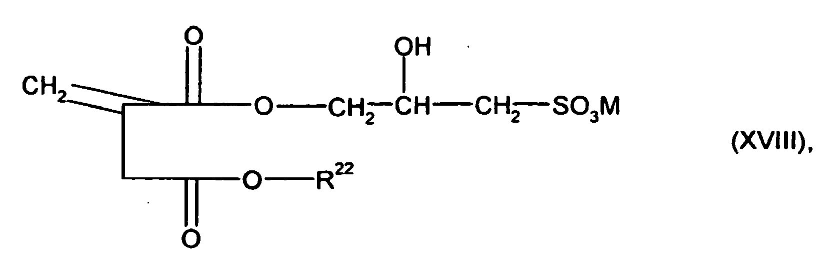

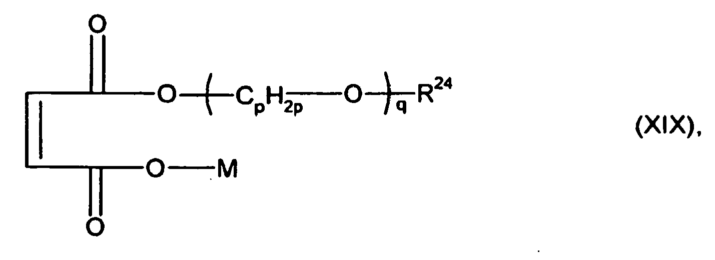

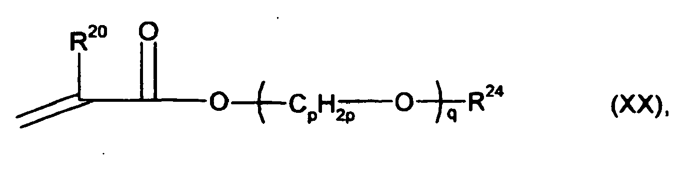

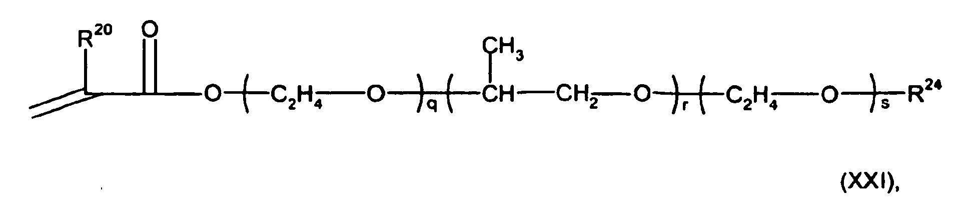

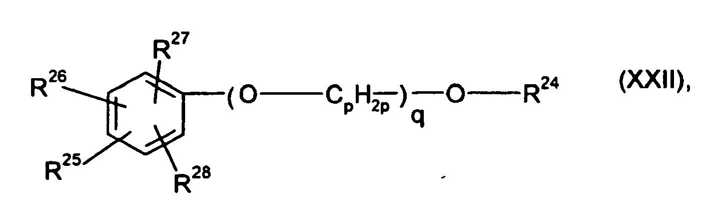

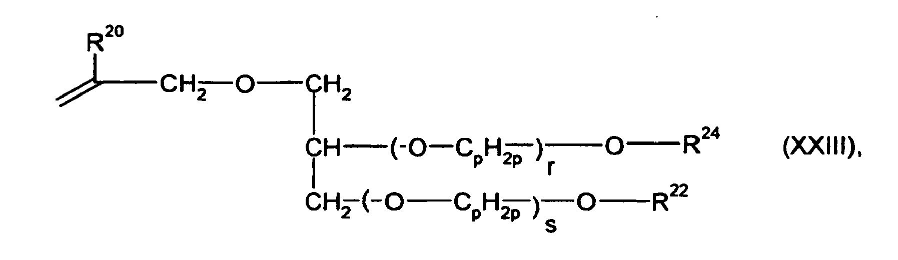

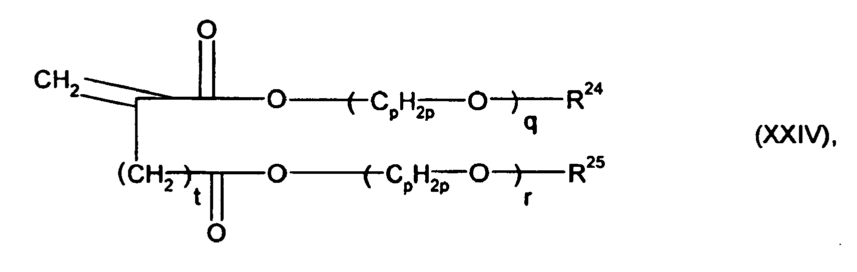

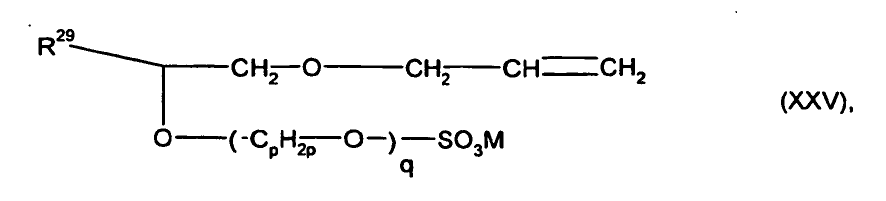

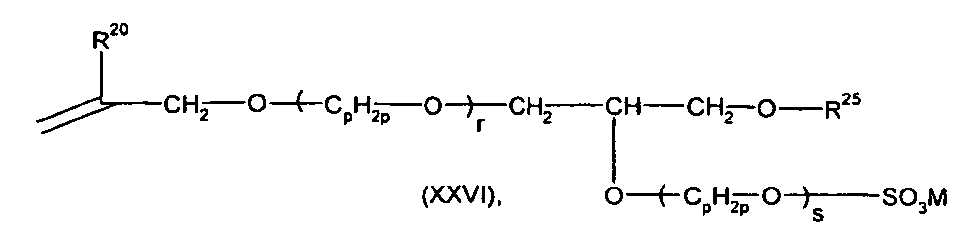

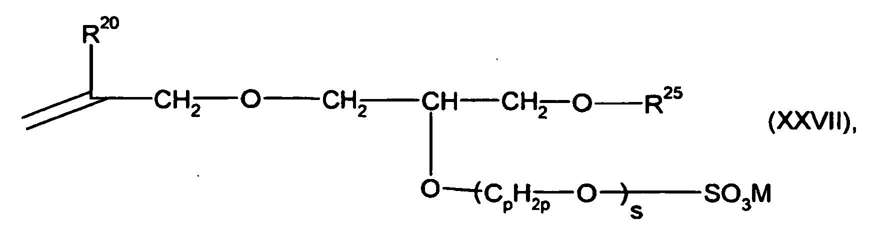

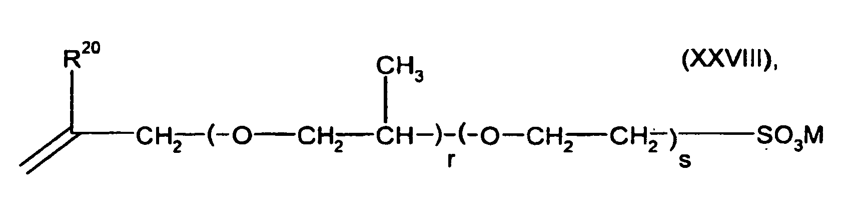

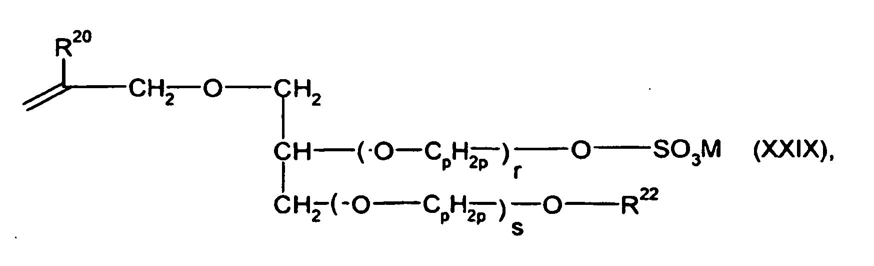

CH₂=CH-O-CᵤH₂ᵤ-O-(C₃H₆-O-)ᵥ(C₂H₄-O-)_{w}-R³⁰ (XXX),

CH₂=CH-CH₂-O-(C₃H₆-O-)ᵥ(C₂H₄-O-)_{w}-R³⁰ (XXXI),

CH₂=CH-CH₂-O-(C₃H₆-O-)ᵥ(C₂H₄-O-)_{w}-SO₃M (XXXII),

[R³¹-O-(C₃H₆-O-)ᵥ(C₂H₄-O-)_{w}]ₜ-R³² (XXXIII),

worin R²⁰ und R²¹ unabhängig voneinander Wasserstoff oder C₁-C₄-Alkyl, vorzugsweise Wasserstoff oder Methyl, bedeuten,
R²² C₆-C₃₀-Alkyl, C₆-C₃₀-Alkenyl oder C₇-C₃₀-Alkylaryl ist, vorzugsweise C₈-C₂₄-Alkyl,
M ein Alkalimetallkation, ein Ammoniumion oder Wasserstoff bedeutet, vorzugsweise ein Natriumion oder ein Ammoniumion,
R²⁵, R²⁶ und R²⁷ unabhängig voneinander Wasserstoff, C₁-C₃₀-Alkyl, C₂-C₃₀-Alkenyl, Cycloalkyl, Aryl, oder Acyl bedeuten, vorzugsweise Wasserstoff, C₁-C₂₄-Alkyl oder C₂-C₄-Alkenyl,
n und m unabhängig voneinander ganze Zahlen von 1 bis 4 sind, vorzugsweise 2,
p eine ganze Zahl von 2 bis 4 bedeutet, vorzugsweise 2,
q eine ganze Zahl von 1 bis 100 bedeutet, vorzugsweise von 4 bis 20,
R²⁴ Wasserstoff, C₁-C₃₀-Alkyl, C₂-C₃₀-Alkenyl, Cycloalkyl, Aryl, oder Acyl bedeutet, vorzugsweise C₁-C₁₈-Alkyl,
r eine ganze Zahl von 0 bis 100 ist, vorzugsweise von 2 bis 20,
R²⁸ C₂-C₄-Alkenyl bedeutet, vorzugsweise Vinyl, Allyl oder Methylvinyl,
s eine ganze Zahl von 0 bis 100 ist, vorzugsweise von 2 bis 20,
t 1 oder 2 bedeutet,
R²⁹ C₁-C₃₀-Alkyl bedeutet, vorzugsweise C₁-C₄-Alkyl,
u eine ganze Zahl von 1 bis 20 ist, vorzugsweise von 2 bis 10,
v und w unabhängig voneinander ganze Zahlen von 0 bis 100 sind, vorzugsweise von 2 bis 20, wobei mindestens eine der Zahlen v oder w ungleich null sind,
R³⁰ Wasserstoff oder C₁-C₄-Alkyl, vorzugsweise Wasserstoff oder Methyl, bedeutet,
R³¹ ein Alkenylrest oder ein Carboxyalkenylrest mit 6-30 Kohlenstoffatomen ist, und
R³² Wasserstoff, C₁-C₄-Alkyl oder ein Rest der Formel PO₄₋ₜM₃₋ₜ ist.

Von diesen vorstehend aufgezählten Verbindungen werden diejenigen ganz besonders bevorzugt eingesetzt, die mindestens 9 Kohlenstoffatome aufweisen.
Ganz besonders bevorzugt wird als Monomer der Gruppe D) eine Verbindung der Formel XVa eingesetzt 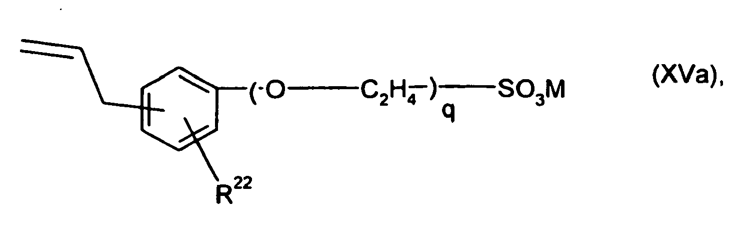 worin q, R²² und M die oben definierten Bedeutungen haben.

Neben den Hauptmonomeren der Gruppe A), den Monomeren der Gruppe B), den Monomeren der Gruppe D) und gegebenenfalls den Monomeren C) können zur Herstellung der Kunststoffdispersion Monomere der Gruppe E), nämlich sonstige radikalisch polymerisierbare Monomere eingesetzt werden, die sich von den Monomeren der Gruppen A) bis D) unterscheiden.

Dabei kann es sich um unterschiedlichste Gruppen von Monomeren handeln.

Zu den Monomeren der Gruppe E) zählen beispielsweise ethylenisch ungesättigte, nichtionische funktionelle Monomere, wie wasserlösliche N-Vinyllactame, wie beispielsweise N-Vinylpyrrolidon.

Weiterhin kommen als ethylenisch ungesättigte, nichtionische funktionelle Monomere Nitrile ethylenisch ungesättigter C₃-C₈-Carbonsäuren in Frage, wie Acrylnitril und Methacrylnitril, sowie haftungsverbessernde und vernetzende Monomere. Auch können C₄-C₈-konjugierte Diene, wie 1,3-Butadien, Isopren und Chloropren, oder aliphatische ethylenisch ungesättigte, gegebenenfalls halogensubstitutierte Kohlenwasserstoffe, wie Ethylen, Propylen, Butylen, Vinylchlorid oder Vinylidenchlorid, als Monomere eingesetzt werden.

Zu den haftungsverbessernden Monomeren gehören sowohl Verbindungen, die eine an das Doppelbindungssystem kovalent gebundene Acetoacetoxy-Einheit aufweisen, als auch Verbindungen mit kovalent gebundenen Harnstoffgruppen. Zu den erstgenannten Verbindungen zählen insbesondere Acetoacetoxyethyl-(meth)acrylat und Acetessigsäureallylester. Zu den harnstoffgruppenhaltigen Verbindungen gehören zum Beispiel N-Vinyl- und N-Allyl-Harnstoff sowie Derivate des Imidazolidin-2-ons, wie N-Vinyl- und N-Allyl-imidazolidin-2-on, N-Vinyloxy-ethylimidazolidin-2-on, N-(2-(Meth)acrylamidoethyl)-imidazolidin-2-on, N-(2-(Meth)-acryloxyethyl)imidazolidin-2-on, N-(2-(Meth)acryloxy-acetamidoethyl)imidazolidin-2-on, sowie weitere dem Fachmann bekannte Haftungsvermittler auf Basis von Harnstoff oder Imidazolidin-2-on. Zur Verbesserung der Haftung eignet sich auch Diacetonacrylamid in Kombination mit einer Nachgabe von Adipinsäuredihydrazid zur Dispersion.

Als vernetzende Monomere können sowohl bifunktionelle als auch polyfunktionelle Monomere eingesetzt werden. Beispiele hierfür sind Diallylphthalat, Diallylmaleinat, Triallylcyanurat, Tetraallyloxyethan, Divinylbenzol, Butandiol-1,4-di(meth)acrylat, Triethylenglykoldi(meth)acrylat, Divinyladipat, Allyl(meth)acrylat, Vinylcrotonat, Methylenbisacrylamid, Hexandioldiacrylat, Pentaerythroldiacrylat und Trimethylolpropantriacrylat.

Die erfindungsgemäß eingesetzten Copolymeren leiten sich von mindestens 40 Gew. %, vorzugsweise 50 bis 90 Gew. % an Hauptmonomeren der Gruppe A) ab. Dabei kann es sich um ein Monomer oder eine Mischung unterschiedlicher Monomeren dieser Gruppe handeln.

Außerdem leiten sich die erfindungsgemäß eingesetzten Copolymeren von 0,1 bis 10 Gew. %, vorzugsweise 1 bis 6 Gew. %, besonders bevorzugt 1 bis 4 Gew. % an Monomeren der Gruppe B) ab. Dabei kann es sich um ein Monomer oder eine Mischung unterschiedlicher Monomeren dieser Gruppe handeln.

Ferner leiten sich die erfindungsgemäß eingesetzten Copolymeren von 1 bis 15 Gew. %, vorzugsweise 2 bis 10 Gew. % an Alkoxysilan-enthaltenden Monomeren der Gruppe C) ab. Dabei kann es sich um ein Monomer oder eine Mischung unterschiedlicher Monomeren dieser Gruppe handeln. Die Monomeren der Gruppe C) sind optional, allerdings ist deren Einsatz bevorzugt. Anstelle von oder zusätzlich zu den Monomeren der Gruppe C) können Amino-, Merkapto- oder Epoxidfunktionalisierte Alkoxysilan enthaltende Monomere eingesetzt werden.

Der Anteil der Monomeren der Gruppe D) in den erfindungsgemäßen Copolymeren beträgt 0,1 bis 10 Gew. %, vorzugsweise 0,5 bis 5 Gew. %, besonders bevorzugt 0,5 bis 3 Gew. %.

Der Anteil der Monomeren der Gruppe E) in den erfindungsgemäßen Copolymeren beträgt 0 bis 20 Gew. %, vorzugsweise 1 bis 15 Gew. %.

Die Mengenangaben der Monomeren sind auf die bei der Emulsionspolymerisation und gegebenenfalls bei der Nachgabe eingesetzte Gesamtmenge der Monomeren bezogen. Der Anteil der in das Copolymer einpolymerisierten Monomeren entspricht im allgemeinen den zugesetzten Monomeren.

Bevorzugt werden von Acrylaten, Methacrylaten und/oder Vinylestern aliphatischer Carbonsäuren abgeleitete Polymerdispersionen verwendet.

Bevorzugte Monomergemische aus den Monomeren zur Herstellung von Poly-(meth)acrylaten gegebenenfalls zusammen mit Vinylestern sind Vinylacetat/- Butylacrylat, Vinylacetat/Dibutylmaleinat, Vinylacetat/Dibutylfumarat, Vinylacetat/2-Ethylhexylacrylat, Vinylacetat/Ethen/-Butylacrylat, Vinylacetat/Ethen/Dibutylmaleinat, Vinylacetat/Ethen/Dibutylfumarat, Vinylacetat/Ethen/2-Ethylhexylacrylat, Methylmethacrylat/Butylacrylat, Methylmethacrylat/Styrol/Butylacrylat, Methylmethacrylat/2-Ethylhexylacrylat, Methylmethacrylat/Styrol/2-Ethylhexylacrylat, Styrol/Butylacrylat, Styrol/2-Ethyl-hexylacrylat, Methylmethacrylat/Isobutylacrylat, Methylmethacrylat/- Isopropylacrylat.

Weitere bevorzugte Monomergemische aus den Monomeren zur Herstellung von Polyvinylesters gegebenenfalls zusammen mit weiteren funktionellen Monomeren sind Vinylacetat/Vinylchlorid/Ethen, Vinylacetat/Vinyllaurat/Ethen, Vinylacetat/- Versaticsäurevinylester/2-Ethylhexylacrylat, Vinylacetat/Vinyllaurat/Ethen/Vinylchlorid, Vinylacetat/Versaticsäurevinylester/-Ethen/Vinylchlorid, Versaticsäurevinylester/EthenNinylchlorid, Vinylacetat/-Versaticsäurevinylester, Vinylacetat/Versaticsäurevinylester/Ethen und Vinylacetat/Ethen, wobei die Kombination Vinylacetat/- Ethen besonders bevorzugt ist.

Wässerige Kunststoffdispersion enthaltend
a) ein durch Emulsionspolymerisation hergestelltes Copolymer, das sich ableitet von
   A) mindestens 40 Gew. %, bezogen auf die Gesamtmonomermenge, von Vinylestern gesättigter Carbonsäuren, gegebenenfalls vinylaromatischen Monomeren und/oder gegebenenfalls Estern α, β-ungesättigter Carbonsäuren,
   B) 0,1 bis 10 Gew. %, bezogen auf die Gesamtmonomermenge, von α, βethylenisch ungesättigten Mono- und/oder Dicarbonsäuren, und/oder von α, β-ethylenisch ungesättigten Sulfonsäuren und/oder von α, β-ethylenisch ungesättigten Phosphorsäuren und/oder von α, β-ethylenisch ungesättigten Phosphonsäuren und/oder von Amiden von α, β-ethylenisch ungesättigten Mono- und/oder Dicarbonsäuren,
   C) 0,5 bis 15 Gew. %, bezogen auf die Gesamtmonomermenge, von ethylenisch ungesättigten Monomeren, welche mindestens eine Alkoxysilylgruppe aufweisen,
   D) gegebenenfalls bis zu 10 Gew. %, bezogen auf die Gesamtmonomermenge, eines ethlyenisch ungesättigten Monomeren, das eine anionische und/oder nichtionische emulgierende Gruppe enthält, und
   E) gegebenenfalls bis zu 20 Gew. %, bezogen auf die Gesamtmonomermenge, von mit den Monomeren der Gruppen A), B), C) und gegebenenfalls D) copolymerisierbaren sonstigen Monomeren, mit der Maßgabe, dass anstelle oder zusetzlich zur Copolymerisation des Monomeren C) nach der Emulsionspolymerisation 0,5 bis 15 Gew. %, bezogen auf die Gesamtmonomermenge, eines Monomeren zugegeben wird, das neben mindestens einer Alkoxysilylgruppe mindestens eine Amino-, Merkapto- oder Epoxidgruppe aufweist, und
b) kolloidales Siliciumdioxid
   sind neu und ebenfalls Gegenstand der vorliegenden Erfindung.

Besonders bevorzugt wird in den erfindungsgemäßen Zusammensetzungen als Kunststoffdispersion eine radikalische Emulsionspolymerisation hergestellte Polymerdispersion eingesetzt, die ein von Acrylat und/oder Methacrylat als Hauptmonomer abgeleitetes Homo- oder Copolymer ("Polyacrylat") oder ein von Vinylester als Hauptmonomer abgeleitetes Homo- oder Copolymer ("Polyvinylester") ist, vorzugsweise ein Polyacrylat oder ein Polyvinylester mit einer Glasübergangstemperatur zwischen -50 und + 50°C. Die Glasübergangstemperatur des Polymeren kann durch geeignete Auswahl der Monomerkombinationen vom Fachmann eingestellt werden.

Die erfindungsgemäß eingesetzte Kunststoffdispersion kann neben den einpolymerisierten Emulgatoren zusätzlich durch Schutzkolloide und/oder durch Emulgatoren stabilisiert werden. Diese können bereits während der Emulsionspolymerisation vorliegen oder danach zugesetzt werden.

Bei den Schutzkolloiden handelt es sich um polymere Verbindungen, beispielsweise mit Molekulargewichten von größer als 2000 g/mol, wohingegen es sich bei den Emulgatoren um niedermolekulare Verbindungen handelt, deren relative Molekulargewichte beispielsweise unter 2000 g/mol liegen. Diese Verbindungen sind bereits bei der Polymerisation zugegeben und können gegebenenfalls auch nach der Polymerisation noch nachgegeben werden.

Beispiele für Schutzkolloide sind Stärke, Gummi Arabicum, Alginate oder Traganth, Methyl-, Ethyl-, Hydroxyethyl- oder Carboxymethylcellulose oder mittels gesättigter Säuren oder Epoxiden modifizierte Stärke sowie synthetische Substanzen wie Polyvinylalkohol (mit oder ohne Restacetylgehalt) oder teilweise veresterter oder acetalisierter oder mit gesättigten Resten veretherter Polyvinylalkohol, sowie Polypeptide, wie Gelatine, aber auch Polyvinylpyrrolidon, Polyvinylmethylacetamid oder Poly(meth-)acrylsäure. Bevorzugt wird Polyvinylalkohol.

Der Gewichtsanteil derartiger gegebenenfalls anwesender Schutzkolloide, bezogen auf die Gesamtmenge der eingesetzten Monomeren, beträgt üblicherweise bis zu 15 %.

In vielen Fällen ist es vorteilhaft, bei der Herstellung der Dispersionen, zusätzlich zu den Schutzkolloiden oder anstelle von Schutzkolloiden nichtionische und/oder anionische Emulgatoren zu verwenden.

Geeignete nichtionische Emulgatoren sind araliphatische und aliphatische nichtionische Emulgatoren, wie zum Beispiel ethoxylierte Mono-, Di- und Trialkylphenole (EO-Grad: 3 bis 50, Alkylrest C₄ bis C₉), Ethoxylate langkettiger Alkohole (EO-Grad: 3 bis 50, Alkylrest: C₈ bis C₃₆), sowie Polyethylenoxid/- Polypropylenoxid-Blockcopolymere. Bevorzugt werden Ethoxylate langkettiger Alkanole (Alkylrest: C₁₀ bis C₂₂, mittlerer Ethoxylierungsgrad: 3 bis 50), und darunter besonders bevorzugt solche auf Basis von nativen Alkoholen, Guerbet-Alkoholen oder Oxoalkoholen mit einem linearen oder verzweigten C₁₂-C₁₈-Alkylrest und einem Ethoxylierungsgrad von 8 bis 50, eingesetzt.

Weitere geeignete Emulgatoren finden sich in Houben-Weyl, Methoden der organischen Chemie, Band XIV/1, Makromolekulare Stoffe, Georg-Thieme-Verlag, Stuttgart, 1961, S. 192-208).

Geeignete anionischen Emulgatoren sind Alkali- und Ammoniumsalze von Alkylsulfaten (Alkylrest: C₈ bis C₁₈), Alkylphosphonaten (Alkylrest: C₈ bis C₁₈), von Schwefelsäurehalbestern oder Phosphorsäuremono- und diestem ethoxylierter Alkanole (EO-Grad: 2 bis 50, Alkylrest: C₈ bis C₂₂) und ethoxylierter Alkylphenole (EO-Grad: 3 bis 50, Alkylrest: C₄ bis C₉), von Alkylsulfonsäuren (Alkylrest: C₁₂ bis C₁₈), von Alkylarylsulfonsäuren (Alkylrest: C₉ bis C₁₈), von Sulfobemsteinsäurehalbestern und Sulfobernsteinsäurediestern von Alkanolen (Alkylrest: C₈ bis C₂₂) und ethoxylierten Alkanolen (EO-Grad: 2 bis 50, Alkylrest: C₈ bis C₂₂), sowie nichtethoxylierter und ethoxylierter Alkylphenole (EO-Grad: 3 bis 50, Alkylrest: C₄ bis C₉). In der Regel werden die aufgeführten Emulgatoren als technische Gemische eingesetzt, wobei sich die Angaben zu Länge von Alkylrest und EO-Kette auf das jeweilige Maximum der in den Mischungen vorkommenden Verteilungen bezieht. Beispiele aus den genannten Emulgatorklassen sind ^{®}Texapon K12 (Natriumlaurylsulfat der Firma Cognis), ^{®}Emulsogen EP (C₁₃-C₁₇-Alkylsulfonat der Firma Clariant), ^{®}Maranil A 25 IS (Natrium-n-alkyl-(C₁₀-C₁₃) benzolsulfonat der Firma Cognis), ^{®}Genapol liquid ZRO (Natrium C₁₂/C₁₄-Alkylethersulfat mit 3 EO-Einheiten der Firma Clariant), ^{®}Hostapal BVQ-4 (Natriumsalz eines Nonylphenolethersulfats mit 4 EO-Einheiten der Firma Clariant), Aerosol MA 80 (Natriumdihexylsulfosuccinat der Firma Cyctec Industries), Aerosol A-268 (Dinatriumisodecylsulfosuccinat von Cytec Industries) und Aerosol A-103 (Dinatriumsalz eines Halbesters der Sulfobernsteinsäure mit einem ethoxylierten Nonylphenol der Firma Cytec Industries).

Die Mengen der gegebenenfalls eingesetzten Emulgatoren liegen in den üblicherweise einzuhaltenden Grenzen. Insgesamt werden daher bis zu etwa 10 Gew.-%, vorzugsweise 0,1 bis 5 Gew.-%, bezogen auf die Gesamtmenge der zur Herstellung der Dispersionen eingesetzten Monomere, verwendet. In der Regel werden dabei Mischungen aus anionischen und nichtionischen Emulgatoren eingesetzt, es können jedoch auch anionische und nichtionische Emulgatoren alleine zur zusätzlichen Stabilisierung der Dispersionen eingesetzt werden.

Die erfindungsgemäß eingesetzten wässrigen Kunststoffdispersionen besitzen typischerweise Feststoffgehalte von 20 bis 70 Gew.-%, vorzugsweise 30 bis 65 Gew.-%, und besonders bevorzugt 40 bis 60 Gew.-%.

Gegebenenfalls enthalten die erfindungsgemäß eingesetzten Polymerdispersionen noch weitere an sich übliche Zusätze.

Als Additive und weitere Bestandteile können Filmbildehilfsmittel, wie Testbenzin, Texanol^{®}, TxiB^{®}, Butylglykol, Butyldiglykol, Butyldipropylenglykol und Butyltripropylenglykol; Weichmacher, wie Dimethylphthalat, Disobutylphthalat, Adipinsäurediisobutylester, Coasol B^{®} und Plastilit 3060^{®}; Netzmittel, wie AMP 90^{®}, TegoWet.280^{®}, Fluowet PE^{®}; Verdicker, wie Polyacrylate oder Polyurethane, wie Borchigel L75^{®} und Tafigel PUR 60^{®}; Entschäumer, z.B. Mineralöl- oder Silikonentschäumer; UV-Schutzmittel, wie Tinuvin 1130^{®}, nachträglich zugesetzte stabilisierende Emulgatoren oder Polymere, wie Polyvinylalkohol oder Celluloseether, die Rheologie modifizierende Hilfsmittel z.B. Polyacrylat- oder Polyurethan-Verdicker, und andere Additive und Hilfsmittel, wie sie zur Formulierung von Putzen und Farben üblich sind, verwendet werden.

Die erfindungsgemäß eingesetzte Polymerdispersion wird durch radikalische Emulsionspolymerisation hergestellt. Für die Durchführung der Emulsionspolymerisation kommt jede zweckdienlich und sachgemäß gewählte Technik in Betracht. Zu den Beispielen für Methoden der Emulsionspolymerisation gehört ein Batchprozess, bei dem ein Polymerisationsreaktor mit Wasser, einem als Emulgator dienenden Tensid und einer monomeren Komponente beschickt wird. Zur Ingangsetzung der Polymerisation wird die Temperatur des Gemisches erhöht, und das Gemisch wird mit geeigneten Additiven, wie einem Polymerisationsstarter versetzt. Beim Monomerdosierverfahren werden dem Polymerisationsreaktor Wasser und Emulgator zugeführt. Die Temperatur des Gemisches wird angehoben, und eine monomere Komponente wird tropfenweise in das Gemisch gegeben. Beim Monomeremulsionsdosierverfahren wird vor der tropfenweise Zugabe des Monomers die monomere Komponente zunächst mit einem als Emulgator dienenden Tensid und mit Wasser emulgiert, und die dabei entstandene Emulsion wird dann tropfenweise in das Gemisch gegeben.

Die Emulsionspolymerisation kann also im Batchverfahren, im Zulaufverfahren, im kombinierten Batch/Zulauf-Verfahren oder im kontinuierlichen Verfahren durchgeführt werden. Neben der Herstellung einphasiger Emulsionspolymerisate ist auch die Herstellung mehrphasiger Emulsionspolymerisate möglich. Dieses erfolgt durch Polymerisation mehrerer, vorzugsweise zweier unterschiedlicher Monomerkombinationen in auf einanderfolgenden Stufen. Bevorzugt setzt man jedoch einphasige Emulsionspolymerisate ein.

Als radikalische Initiatoren werden beispielsweise verwendet: Wasserstoffperoxid, Benzoylperoxid, Cyclohexanonperoxid, Isopropylcumylhydroperoxid, Persulfate des Kaliums, Natriums und Ammoniums, Peroxide von geradzahligen gesättigten einwertigen aliphatischen Carbonsäuren der Kettenlänge C₈-C₁₂, Tertiärbutylhydroperoxid, Ditertiärbutytperoxid, Diisopropylpercarbonat, Azoisobuttersäuredinitril, Acetylcyclohexansulfonylperoxid, Tertiärbutylperbenzoat, Tertiärbutylperoctoat, Bis-(3,5,5-trimethyl)-hexanoylperoxid, Tertiärbutylperpivalat, Hydroperoxypinan, p-Methanhydroperoxid. Die vorgenannten Verbindungen können auch innerhalb eines Redoxsysteme verwendet werden, wobei Übergangsmetallsalze wie Eisen-II-salze oder andere Reduktionsmittel mitverwendet werden. Als Reduktionsmittel bzw. Regler können Alkalisalze der Oxymethansulfinsäure, Mercaptane der Kettenlänge C₁₀-C₁₄, Buten-(I)-ol-(3), Hydroxylaminsalze, Natriumdialkyldithiocarbamat, Natriumbisulfit, Ammoniumbisulfit, Natriumdithionit, Diisopropylxanthogendisulfid, Ascorbinsäure, Weinsäure, Isoascorbinsäure, Borsäure, Harnstoff und Ameisensäure mitverwendet werden.

Vorzugsweise werden jedoch wasserlösliche Persulfate, insbesondere Ammoniumpersulfat oder Natriumpersulfat zum Starten der Polymerisation verwendet.

Ebenfalls bevorzugt können beliebige, sachgemäß unter den bekannten Substanzen ausgewählte Kettenübertragungsreagenzien eingesetzt werden. Beispiele dafür sind unter anderem Alkohole, wie Methanol, Ethanol, Propanol und Butenol, Aldehyde und Ketone, wie Aceton, Methylethylketon, Cyclohexan, Acetophenon, Acetaldehyd, Propionsäurealdehyd, n-Butylaldehyd, Furfural und Benzaldehyd sowie Mercaptane wie Dodecylmercaptan, Laurylmercaptan, Normalmercaptan, Thioglycolsäure, Octylthioglycolat und Thioglycerol. Solche Kettenübertragungsreagenzien können alleine oder in Form einer Kombination von zwei oder mehreren davon eingesetzt werden.

Zur Emulsionspolymerisation kann jedes beliebige zweckdienlich und sachgemäß ausgewählte wässrige Medium verwendet werden. Zu den Beispielen für wässrige Medien gehören Wasser und wässrig alkoholische Lösungen. Im Hinblick auf Gebrauchseigenschaften und Kosten wird Wasser bevorzugt. Wasser aller Art, zum Beispiel Leitungswasser oder Ionenaustauscherwasser kommt in Betracht.

Zur Stabilisierung verwendetes Schutzkolloid und/oder Emulgator kann ebenfalls entweder zu Beginn der Polymerisation komplett vorgelegt oder partiell vorgelegt und partiell dosiert oder komplett während der Polymerisation zudosiert werden.

Die Polymerisationstemperatur bewegt sich typischerweise im Bereich von 20 bis 120°C, vorzugsweise im Bereich von 30 bis 110°C und ganz besonders bevorzugt im Bereich von 45 bis 95°C.

Nach Abschluss der Polymerisation kann zur Entmonomerisierung eine weitere, vorzugsweise chemische Nachbehandlung, insbesondere mit Redoxkatalysatoren, wie zum Beispiel Kombinationen aus den obengenannten Oxidationsmitteln und Reduktionsmitteln angeschlossen werden. Weiterhin kann in bekannter Weise beispielsweise durch physikalische Entmonomerisierung, d. h. destillative Entfernung (insbesondere über Wasserdampfdestillation) oder durch Strippen mit einem Inertgas, vorhandenes Restmonomer entfernt werden. Besonders effizient ist eine Kombination aus physikalischen und chemischen Methoden, die eine Absenkung der Restmonomere auf sehr niedrige Gehalte (< 1000 ppm, vorzugsweise < 100 ppm gestattet.

Die erfindungsgemäßen Zusammensetzungen lassen sich problemlos durch einfaches Mischen der vorgesehenen Mengen der einzelnen Komponenten mittels eines herkömmlichen Rührwerks oder dergleichen herstellen. Bei den erfindungsgemäßen Zusammensetzungen wird die Kunststoffdispersion, die eine Säuregruppe und eine Alkoxysilylgruppe enthält und verschiedene hervorragende physikalische Eigenschaften besitzt mit dem kolloidalen Siliciumdioxid verbunden. Daher sind die Zusammensetzungen durch stabile physikalische Eigenschaften und ausgezeichnete Gebrauchseigenschaften gekennzeichnet.

Die erfindungsgemäßen Zusammensetzungen können im Baubereich eingesetzt werden, nämlich als Putze oder als Farben. Besonders bevorzugt werden diese Zusammensetzungen als Putze, Fassadenfarben und Dachsteinfarben verwendet. Diese Verwendungen sind ebenfalls Gegenstand der vorliegenden Erfindung. Besonders bevorzugte erfindungsgemäß eingesetzte Putze und Farben werden unter Verwendung von nichtionischen Emulgatoren als Dispergiermittel stabilisiert, beispielsweise mit den Produkten Surfynol 104 H, Additiol VXW 6208, Nusoperse 2006 und Nuosperse 2008.

Noch ein weiterer Gegenstand der vorliegenden Erfindung ist die Verwendung von Kunststoffdispersionen enthaltend eine durch radikalische Emulsionspolymerisation hergestellte wässrige Polymerdispersionen abgeleitet von den oben beschriebenen Monomeren A), B), C), D) und gegebenenfalls E) sowie kolloidales Siliziumdioxid in Putzen oder in Farben.

Die nachfolgenden Beispiele dienen der Erläuterung der Erfindung. Die in den Beispielen angegebenen Teile und Prozente beziehen sich auf das Gewicht, soweit nicht anders vermerkt.

### Beispiele 1 bis 5

Arbeitsvorschrift für die Herstellung der erfindungsgemäß verwendbaren Copolymerisatdispersion nach Beispiel 1

In einen mit Ankerrührer und Kühler ausgestatteten 2,5 Liter Reaktor wurde eine Vorlage gemäß Tabelle 1 gegeben und auf 80°C erhitzt. Anschließend wurden 5 % der in Tabelle 1 beschriebenen Monomerdispersion so schnell als möglich zugegeben und sofort danach wurde eine Lösung von 0,38 g Kaliumperoxodisulfat in 18 g Wasser hinzugefügt. Nach 15 Minuten Polymerisation wurden der Rest der Monomeremulsion und eine Lösung von 1,54 g Kaliumperoxodisulfat in 72 g Wasser im Verlauf von 4 Stunden separat hinzugefügt, wobei die Temperatur bei 80°C gehalten wurde. 30 Minuten nach Beendigung der Zugabe wurde 9,36 einer 12,5 %igen wässerigen Ammoniaklösung in den Reaktor gegeben und die Temperatur wurde für eine weitere Stunde bei 80°C gehalten. Anschließend wurde der Ansatz auf Raumtemperatur abgekühlt und im Verlauf von 30 Minuten wurden dem Ansatz 1047,46 g einer kolloidalen Siliziumdioxiddispersion (Feststoffgehalt: 41 %;
Teilchengröße: 25 nm, pH: 9,9) hinzugefügt.

Die Dispersionen der Beispiele 2 bis 5 wurden analog der obigen Arbeitsvorschrift hergestellt. Einzelheiten zur Versuchsdurchführung sind in der nachfolgenden Tabelle 1 dargestellt. Bei den Vergleichsbeispielen 2 und 4 wurde kein kolloidales Siliziumdioxid zugesetzt. Tabelle 2 zeigt einige Eigenschaften der erhaltenen Dispersionen.

**Tabelle 1: Zusammensetzung der hergestellten Polymerdispersionen**

| | Beispiel 1 | Beispiel 2 | Beispiel 3 | Beispiel 4 | Beispiel 5 |
|---|---|---|---|---|---|
| **Vorlage** | | | | | |
| Wasser (g) | 308 | 308 | 308 | 308 | 308 |
| Emulgator D)¹⁾ (g) | 25,3 | 25,3 | 0,6 | 0,6 | 0,6 |
| **Monomeremulsion** | | | | | |
| Wasser (g) | 299 | 408 | 299 | 324 | 341,7 |
| Emulgator D)¹⁾ (g) | 13,1 | 13,1 | 37,7 | 37,7 | 37,7 |
| Methacrylsäure (g) | 18,9 | 18,9 | 18,9 | 18,9 | 18,9 |
| Methylmethacrylat (g) | 295,8 | 295,8 | 295,8 | 295,8 | 295,8 |
| Butylacrylat (g) | 304,2 | 304,2 | 304,2 | 304,2 | 304,2 |
| Vinyl-triethoxysilan (g) | 13,1 | 13,1 | 13,1 | 13,1 | 13,1 |
| **Nachgabe** | | | | | |
| Kolloidales Siliciumdioxid (g) | 1047,5 | - | 1030 | - | 515 |
| Wasser (g) | - | - | - | 78 | - |

| | | | | | |
|---|---|---|---|---|---|
| ¹⁾ Poly(oxy-1,2-ethandiyl)-alpha-sulfo-omega-[4-nonyl-2-(1-propenyl)-phenoxy] (verzweigt) Ammoniumsalz | | | | | |

**Tabelle 2: Physikalische Eigenschaften der hergestellten Polymerdispersionen**

| Beispiel Nr. | Feststoff- gehalt (%) | Viskosität nach Brookfield mPas (23°C, 20 Upm) | pH-Wert | Teilchen-größe (nm)²⁾ |
|---|---|---|---|---|
| 1 | 45,2 | 1290 | 8,4 | 108 |
| 2 | 45,0 | 9200 | 7,8 | 78 |
| 3 | 45,0 | 80 | 8,5 | 139 |
| 4 | 44,7 | 370 | 8,4 | 126 |
| 5 | 44,9 | 100 | 8,4 | 151 |

| | | | | |
|---|---|---|---|---|
| ²⁾ mittlerer Teilchendurchmesser (Gewichtsmittel) ermittelt durch dynamische Lichtstreuung | | | | |

Mit den Dispersionen der Beispiele 1 und 2 wurden Farben nach folgender Rezeptur hergestellt (GT = Gewichtsteile):
242 GT Wasser
242 GT 1,2-Propylenglykol
52 GT Dispex GA 40 (Handelsprodukt der Fa. Ciba Speciality Chemicals;
   Dispergiermittel enthaltend Ammoniumsalz eines Acrylsäurecopolymerisats)
10 GT AMP 90 (2-Amino-2-Methyl-I-Propanol)
20 GT Entschäumer BYK 022
20 GT Biozid Mergal K7
   wurden gemischt, unter Rühren 740 GT Titandioxid Kronos 2190 eingetragen und anschließend mit einem Dissolver mit mindestens 14 m/s Umfangsgeschwindigkeit an der Zahnscheibe für 20 Minuten dispergiert. Nach dem Abkühlen der Pigmentanreibung wurden
185 GT Bindemittel (Dispersion)
33 GT Pigmentanreibung unter Rühren gemischt.

Während des weiteren Rührens bei moderater Rührgeschwindigkeit wurden
1,5 GT Ammoniak (25%ig)
15,3 GT 1,2-Propylenglykol
3,7 GT Texanol (Handelsprodukt der Fa. Eastman Chemicals; Lösungsmittel enthaltend 2,2,2-Trimethyl-1,3-pentandiol-monoisobutyrat), und am Ende die Verdickermischung
8,3 GT Mowilith LDM 7002 (ca. 18%ig in Wasser) zugegeben.

Mit den Dispersionen der Beispiele 1 und 2 wurden Putze nach der in Tabelle 3 angegebenen Rezeptur hergestellt (GT = Gewichtsteile):

**Tabelle 3: Putz**

| Bestandteile | Gewichtsteile |
|---|---|
| Wasser | 53,5 |
| Verdickungsmittel (Polyacrylat) | 1,5 |
| Mowiplus XW 330, Dispergiermittel | 3,0 |
| Calgon N, 10 %, Netzmittel | 6,0 |
| Natronlauge, 10 % | 2,0 |
| Agitan, Entschäumer | 2,0 |
| Dispersion³⁾ | 140,0 |
| Titandioxid Kronos 2160 | 20,0 |
| China Clay B | 20,0 |
| Calciumcarbonat, Omyacarb 40 GU | 150,0 |
| Calciumcarbonat, Omyacarb 130 GU | 170,0 |
| Calcilit 0,1-0,5 | 100,0 |
| Calcilit 1,5-2,0 | 300,0 |
| Testbenzin | 4,0 |
| Butyldiglykolacetat | 6,0 |
| Polyethylen | 2,0 |

| | |
|---|---|
| ³⁾ gemäß Beispielen 1 und 2 | |

Die in Tabelle 3 aufgelisteten Komponenten wurden in einem Rührgefäß zu einem Putz verarbeitet.

### Anwendungstechnische Untersuchungen

### Blockfestigkeit

Zur Prüfung der Blockfestigkeit wurden Deckkraftkarten der Fa. BYK Malinckrodt oder der Fa. Morest mit 50 µm Naßschichtdicke beschichtet. Nach 24-stündigem Trocknen wurden zwei beschchtete Karten mit ihrer beschichteten Seite aufeinander gelegt und 2 Stunden bei Raumtemperatur mit 3,1 * 10⁴ N/m² belastet. Anschließend wurde die Kraft bestimmt, um die Karten wieder voneinander zu trennen.

### Gitterschnitttest

Glasplatten wurdem mit 200 µm Nassfilmdicke beschichtet und bei 23°C 24 Stunden lang bei 50 %iger Luftfeuchtigkeit getrocknet. Die Gitterschnittprüfung erfolgte gemäß DIN 51151.

### Blistertest

Die Farben wurden auf einer Glasplatte gut deckend mit einer Malerrolle appliziert. Nach einer Trocknungszeit von 24 Stunden wurde ein zweiter Anstrich in gleicher Weise aufgebracht. Die Größe der Anstrichfläche betrug 20 x 30 cm. Nach einer 24-stündigenTrocknung des Zweitanstichs wurden die Glasplatten mit der beschichteten Seite nach unten auf ein Wasserbad (Blisterbad) gelegt. Die Temperatur des Wasserbades betrugt 50°C. Der Abstand der Wasseroberfläche zur Probeplatte betrugt 15 cm und die Probeplatten deckten das Wasserbad vollflächig ab. Nach 8 Stunden Belastung wurden die Probeplatten vom Blisterbad entnommen und senkrecht bei Raumtemperatur zum Trocknen aufgestellt. Die Trocknungszeit betrug mindestens 2 Stunden. Die Auswertung erfolgte visuell an der getrockneten Probe. Beurteilt wurden Haftung und Blasenbildung.

### Bestimmung der Anschmutzneigung mit Schmutz-Suspensionen

Die zu untersuchende Farbe wurde mit einem Kastenrakel (300µm) auf Faserzementplatten, Eterplan, 300 x 150 x 4 mm aufgezogen. Der zu untersuchende Putz wurde auf die Eterplanplatten aufgetragen und 24 Stunden bei Raumtemperatur getrocknet.

Als Prüfmedium diente eine Schmutzsuspension aus 17 % Gasruß, 70 % japanischem Normstaub Nr. 8 und 13 % Spezial Pitch Nr. 5 (Fa. Worlee). Das verriebene Normschmutzpulver (1,0 g) wurde in Butylglykol (1,0 g) verrührt und in 998,0 g Wasser suspendiert.

Die Probetafeln wurden auf einer Unterlage im Winkel von 60° aufgestellt. 500 ml der Schmutzsuspension wurden in einem Kreislauf mit einer Pumpe 30 Minuten lang über die Probetafel gleichmäßig getropft. Danach wurde 24 Stunden lang bei 50°C getrocknet. Anschließend wurde der L-Wert gemäß DIN 5033 bestimmt. Dieser Zyklus wurde fünfmal wiederholt und jedes Mal der L-Wert bestimmt. Bei jedem neuen Zyklus wurde eine neue Schmutzsuspension verwendet. Bei der Bestimmung des L-Werts wurde die Messung an vier Stellen der Oberfläche durchgeführt und daraus der Mittelwert bestimmt. Pro Zyklus wurde die Differenz des L-Werts ermittelt (L-Wert, weiß = zu Beginn des Zyklus; L-Wert, schwarz = am Ende des Zyklus).

### Ergebnisse der anwendungstechnischen Prüfungen

### Anschmutzneigung

Bei der Bestimmung der Anschmutzneigung mit Schmutz-Suspensionen zeigte ein Putz enthaltend die Dispersion des Beispiels 1 eine Differenz der L-Werte (weiß-schwarz) von 9,8. Demhingegen wies ein Putz enthaltend die Dispersion des Vergleichsbeispiels 2 eine Differenz der L-Werte (weiß-schwarz) von 16,2 auf.

Nach 3 Monaten Freibewitterung der Proben zeigte ein Putz enthaltend die Dispersion des Beispiels 1 eine Differenz der L-Werte von 2,5. Demhingegen wies ein freibewitterter Putz enthaltend die Dispersion des Vergleichsbeispiels 2 eine Differenz der L-Werte von 3,5 auf. Nach 6 Monaten Freibewitterung der Proben zeigte ein Putz enthaltend die Dispersion des Beispiels 1 eine Differenz der L-Werte von 3,9. Demhingegen wies ein freibewitterter Putz enthaltend die Dispersion des Vergleichsbeispiels 2 eine Differenz der L-Werte von 5,5 auf.

### Gitterschnitt

Bei der Gitterschnittprüfung zeigte eine Farbe enthaltend die Dispersion des Beispiels 1 keine ausgebrochenen Schnittränder (Einstufung 0). Demhingegen zeigte eine Farbe enthaltend die Dispersion des Vergleichsbeispiels 2 bei 15-35 % der Schnittkanten Ausbrüche (Einstufung 3).

### Blockfestigkeit

Beim Test der Blockfestigkeit zeigte eine Farbe enthaltend die Dispersion des Beispiels 1 eine Blockfestigkeit von 40 g / 6,25cm². Demhingegen zeigte eine Farbe enthaltend die Dispersion des Vergleichsbeispiels 2 eine Blockfestigkeit von 1300 g / 6,25cm².

### Blistertest

Beim Blistertest zeigte eine Farbe enthaltend die Dispersion des Beispiels 1 keine Blasenbildung und haftete gut. Demhingegen zeigte eine Farbe enthaltend die Dispersion des Vergleichsbeispiels 2 eine starke Blasenbildung und nur eine unbefriedigende Haftung.

### Beispiele 6 bis 8

Es wurde zunächst eine Paste gemäß dem Rezept in der nachfolgenden Tabelle hergestellt.

| Bestandteile | Gewichtsteile |
|---|---|
| Wasser | 140,0 |
| Verdickungsmittel (Tylose) | 2,0 |
| Agitan 281 | 4,0 |
| Dispergiermittel, Lopon 895 | 4,0 |
| Calgon N, 10 % | 5,0 |
| Titandioxid Kronos 2160 | 200,0 |
| Calciumcarbonat, Omyacarb 5 GU | 210,0 |
| Micro Talkum AT1 | 40,0 |
| China Clay B | 20,0 |
| Ammoniak, konz. | 2,0 |
| Butyldiglykolacetat | 17,0 |
| Tafigel PUR 40 1:9 in Wasser | 6,0 |

Zur Herstellung der Beispielfarben 6, 7 und 8 wurden jeweils 65 Teile der Paste mit 35 Teilen der Dispersion wie folgt zusammengerührt bis eine homogene Farbe entstanden war:
Beispiel 6: 65 Teile Paste und 35 Teile Dispersion gemäß Beispiel 3.
Vergleichsbeispiel 7: 65 Teile Paste und 35 Teile Dispersion gemäß Beispiel 4.
Beispiel 8: 65 Teile Paste und 35 Teile Dispersion gemäß Beispiel 5.

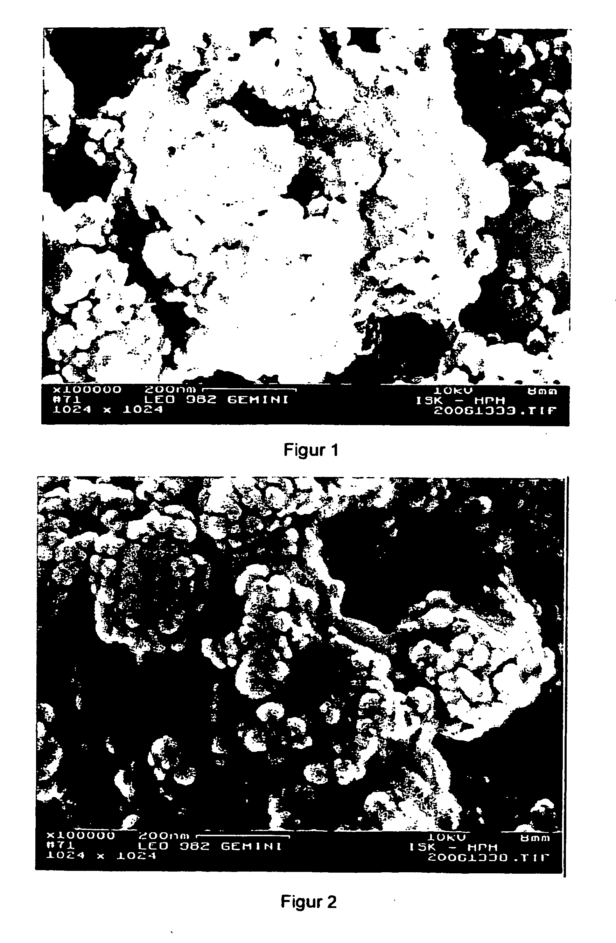

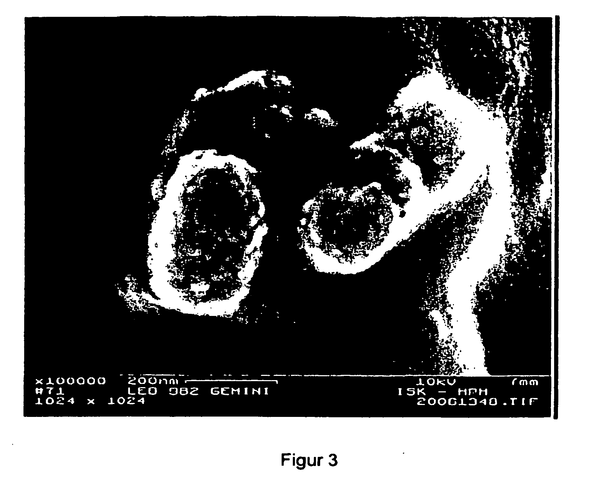

In den Figuren 1 bis 3 sind REM Aufnahmen von Oberflächen von Anstrichen aus den Farben enthaltend die Dispersion des Beispiels 6 (Figur 1), die Dispersion des Beispiels 8 (Figur 2) und die Dispersion des Beispiels 7 (Figur 3) dargestellt.

Die Proben für die REM Aufnahmen wurden wie folgt hergestellt: Die Farben wurden auf Objektträger aufgetragen und bei Raumtemperatur getrocknet. Danach wurden die Oberflächen in einem Raster Elektronen Mikroskop mit einer 100.000-fachen Vergrößerung untersucht. Die erfindungsgemäßen Farben zeigen eine deutliche Nanostruktur auf der Farboberfläche (Figuren 1 und 2) welche sich deutlich von der Vergleichsfarbe (Figur 3) unterschied.

### Beispiele 9 und 10: Herstellung einer Vinylacetat / Ethylen Copolymerisatdispersion mit und ohne kolloidales Siliciumdioxid

In eine Druckapparatur mit Rührer, Mantelheizung und Dosierpumpen wurde eine wässrige Lösung, bestehend aus folgenden Bestandteilen, eingegeben:
22000 g Wasser, 86 g Natriumacetat, 1440 g einer 70 Gew. %-igen wässrigen Lösung eines Oxoalkylethoxylats mit 28 Mol Ethylenoxid, 2160 g einer 10 Gew. %-igen wässrigen Polyvinylalkohollösung (Viskosität der 4 Gew. %-igen wässrigen Lösung 18 mPa*s), 1127 g einer 15 Gew. %-igen Natriumlaurylsulfatlösung, 577 g einer 30 Gew. %-igen wässrigen Natriumvinylsulfonatlösung und 8 g einer 1 Gew. %-igen wässrigen Lösung von Fe-II(SO₄) x 7 H2O. Der pH-Wert der Lösung betrug 7,2. Die Apparatur wurde von Luftsauerstoff befreit und es wurde Ethylen in die Apparatur gedrückt. Bei 20 bar Ethylendruck wurden 1500 g Vinylacetat eindosiert. Es wurde auf 60° C Innentemperatur erhitzt und dabei der Ethylendruck auf 40 bar gesteigert. Nun wurden 10% einer Lösung aus 27,1 g Brüggolit C in 2000 g Wasser eindosiert. Anschließend wurden 10% einer Lösung aus 27,1 g t-Butylhydroperoxid in 2000 g Wasser zudosiert bei einer Innentemperatur von 60° C und es wurde zur Abführung der Reaktionswärme gekühlt. Eine Mischung aus 28800 g Vinylacetat und 70 g Vinyltrimethoxysilan (VTM) und die restlichen 90 % der Reduktions- und Initiatorlösung wurden anschließend, wobei der Ethylendruck auf 40 bar gehalten wurde, bis 4135 g Ethylen im Reaktor waren, zudosiert. Danach wurde eine Lösung aus 36 g Natriumpersulfat in 600 g Wasser zudosiert und die Innentemperatur auf 80° C erhöht und 1 Stunde bei dieser Temperatur gehalten. Unter Rühren wurde anschließend der Großteil des nicht umgesetzten Ethylens ausgegast und es wurden 2 l Wasser zugegeben. Dann wurden unter Anlegen von Vakuum innerhalb von 2 Stunden 2 l Wasser abdestilliert, wodurch der Restvinylacetatgehalt der Dispersion auf 0,05 Gew. %, bezogen auf die Dispersion, reduziert wurde. Durch Wiederholung des Trennverfahrens wurde ein Restvinylacetatgehalt von 0,012 Gew. % erreicht. Anschließend wurde der Ansatz auf Raumtemperatur abgekühlt. Es wurde eine Dispersion eines Copolymeren erhalten, die 12 Gew. % von Ethylen abgeleiteten Einheiten, 0,5 Gew. % an von Na-Vinylsulfonat abgeleiteten Einheiten, 0,2 Gew. % an von Vinyltrimethoxysilan abgeleiteten Einheiten aufwies. Der Gehalt an Polyvinylalkohol betrugt 0,6 Gew. %, bezogen auf den Feststoffgehalt; der Gehalt an Oxoalkylethoxilat betrug 3 Gew. %, bezogen auf den Feststoffgehalt. Der Feststoffgehalt der Dispersion betrug 54%.

Zur Herstellung des Vergleichsbeispiels 9 wurde die Dispersion mit 1896 g Wasser verdünnt. Der Feststoffgehalt betrug 51 %.

Zur Herstellung des erfindungsgemäßen Beispiels 10 wurden der Dispersion im Verlauf von 30 Minuten 8752 g einer kolloidalen Siliziumdioxiddispersion (Feststoffgehalt: 40 %) hinzugefügt. Der Feststoffgehalt betrug 51 %.

Zur Prüfung der Blockfestigkeit wurden Glas-Objektträger mit 300 µm Nassschichtdicke beschichtet. Nach 24-stündigem Trocknen wurden zwei beschichtete Objektträger mit ihrer beschichteten Seite aufeinander gelegt und 2 Stunden bei Raumtemperatur durch ihr eigenes Gewicht belastet. Anschließend wurde die Kraft bestimmt, um die Objektträger wieder voneinander zu trennen.

Für das Vergleichsbeispiel 9 wurde eine Blockfestigkeit von 2444 g / 6,25 cm² ermittelt. Das erfindungsgemäße Beispiel zeigte eine deutlich bessere Blockfestigkeit von 609 g / 6,25 cm².

## Patentansprüche

1. Zusammensetzung enthaltend
a) mineralischen Füllstoff, wobei der Anteil von Teilchen mit einem Durchmesser von mindestens 40 µm mindestens 40 Gew. % beträgt, oder mineralischen Füllstoff, wobei der mittlere Durchmesser der Teilchen 1 bis 40 µm beträgt, wobei der Füllstoff einen Brechungsindex von kleiner als 1,75 aufweist,
b) Pigment, das einen Brechungsindex von größer gleich 1,75 aufweist,
c) kolloidales Siliciumdioxid, und
d) wässerige Kunststoffdispersion, welche ein durch Emulsionspolymerisation hergestelltes Copolymer enthält, das sich ableitet von
A) mindestens 40 Gew. %, bezogen auf die Gesamtmonomermenge, von Estern α, β-ungesättigter Carbonsäuren, Vinylestern gesättigter Carbonsäuren, vinylaromatischen Monomeren oder Kombinationen von zwei oder mehreren dieser Monomeren,
B) 0,1 bis 10 Gew. %, bezogen auf die Gesamtmonomermenge, von α, β-ethylenisch ungesättigten Mono- und/oder Dicarbonsäuren, und/oder von α, β-ethylenisch ungesättigten Sulfonsäuren und/oder von α, β-ethylenisch ungesättigten Phosphorsäuren und/oder von α, β-ethylenisch ungesättigten Phosphonsäuren und/oder von Amiden von α, β-ethylenisch ungesättigten Mono- und/oder Dicarbonsäuren,
C) 0,5 bis 15 Gew. %, bezogen auf die Gesamtmonomermenge, von ethylenisch ungesättigten Monomeren, welche mindestens eine Alkoxysilylgruppe aufweisen,
D) 0,1 bis 10 Gew. %, bezogen auf die Gesamtmonomermenge, eines ethlyenisch ungesättigten oberflächenaktiven Monomeren enthaltend mindestens eine anionische und/oder nichtionische emulgierende Gruppe, und
E) gegebenenfalls bis zu 20 Gew. %, bezogen auf die Gesamtmonomermenge, von mit den Monomeren der Gruppen A), B), C) und D) copolymerisierbaren sonstigen Monomeren, mit der Maßgabe, dass
anstelle oder zusätzlich zur Copolymerisation des Monomeren C) nach der Emulsionspolymerisation 0,5 bis 15 Gew. %, bezogen auf die Gesamtmonomermenge, eines Monomeren zugegeben wird, das neben mindestens einer Alkoxysilylgruppe mindestens eine Amino-, Merkapto- oder Epoxidgruppe aufweist.

2. Zusammensetzung nach Anspruch 1, **dadurch gekennzeichnet, dass** diese zusätzlich e) wasserlösliches Silikat und/oder f) Silikonharz enthält.

3. Zusammensetzung nach einem der Ansprüche 1 bis 2, **dadurch gekennzeichnet, dass** diese einen mineralische Füllstoff a) enthält, wobei der Anteil von Teilchen mit einem Durchmesser von mindestens 40 µm mindestens 40 Gew. % beträgt, und dass dieser Füllstoff in einer Menge von 50 bis 80 Gew. %, bezogen auf die Gesamtformulierung, vorliegt.

4. Zusammensetzung nach einem der Ansprüche 1 bis 2, **dadurch gekennzeichnet, dass** diese einen mineralischen Füllstoff a) enthält, wobei der mittlere Durchmesser der Teilchen 1 bis 40 µm beträgt, und dass dieser Füllstoff in einer Menge von 20 bis 60 Gew. %, bezogen auf die Gesamtformulierung, vorliegt.

5. Zusammensetzung nach einem der Ansprüche 1 bis 4, **dadurch gekennzeichnet, dass** der mineralische Füllstoff a) Calziumcarbonat, Quarz und/oder ein Silikat-Füllstoff ist, insbesondere Glimmer oder Feldspat.

6. Zusammensetzung nach einem der Ansprüche 1 bis 5, **dadurch gekennzeichnet, dass** das Pigment b) Titandioxid, Eisenoxid, Zinkoxid und/oder ein Phthalocyanin-Pigment ist und in einer Menge von 1 bis 50 Gew. %, bezogen auf die Gesamtformulierung, vorliegt.

7. Zusammensetzung nach einem der Ansprüche 1 bis 6, **dadurch gekennzeichnet, dass** das kolloidale Siliciumdioxid c) einen mittleren Durchmesser von 2 bis 100 nm aufweist und in einer Menge von 5 bis 200 Gew. %, bezogen auf die Menge des Copolymeren, vorliegt.

8. Zusammensetzung nach einem der Ansprüche 2 bis 7, **dadurch gekennzeichnet, dass** das wasserlösliche Silikat Alkali-Wasserglas, insbesondere Natrium-Wasserglas oder Kalium-Wasserglas, ist.

9. Zusammensetzung nach einem der Ansprüche 2 bis 8, **dadurch gekennzeichnet, dass** das Silikonharz ein Polydimethylsiloxan ist.

10. Zusammensetzung nach einem der Ansprüche 1 bis 9, **dadurch gekennzeichnet, dass** Komponente A) ein Acrylsäureester und/oder ein Methacrylsäureester ist, gegebenenfalls in Kombination mit Styrol.

11. Zusammensetzung nach einem der Ansprüche 1 bis 9, **dadurch gekennzeichnet, dass** Komponente A) ein Vinylester einer gesättigten Carbonsäure mit ein bis vier Kohlenstoffatomen ist, vorzugsweise Vinylacetat.

12. Zusammensetzung nach einem der Ansprüche 1 bis 11, **dadurch gekennzeichnet, dass** Komponente B) Acrylsäure, Methacrylsäure oder Vinylsulfonsäure ist.

13. Zusammensetzung nach einem der Ansprüche 1 bis 12, **dadurch gekennzeichnet, dass** Komponente C) Vinyl-trialkoxysilan, vorzugsweise Vinyltrimethoxy- oder Vinyltrethoxysilan, ist.

14. Zusammensetzung nach einem der Ansprüche 1 bis 13, **dadurch gekennzeichnet, dass** Komponente D) sich ableitet von Verbindungen der allgemeinen Formeln X, XI, XII, XIII, XIV, XV, XVI, XVII, XVIII, XIX, XX, XXI, XXII, XXIII, XXIV, XXV, XXVI, XXVII, XXVIII, XXIX, XXX, XXXI, XXXII und XXXIII 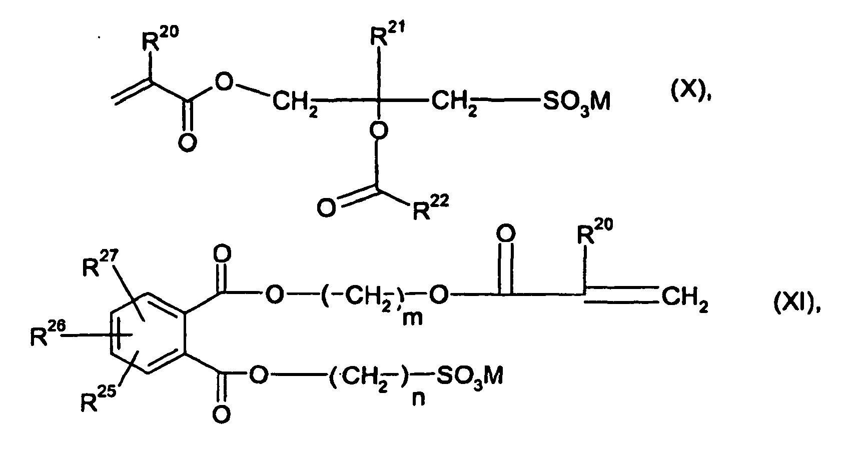 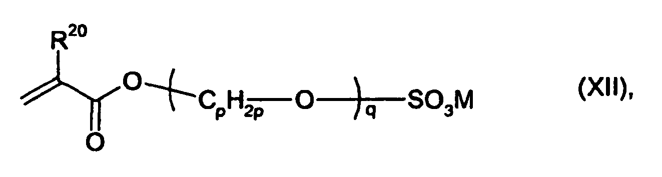 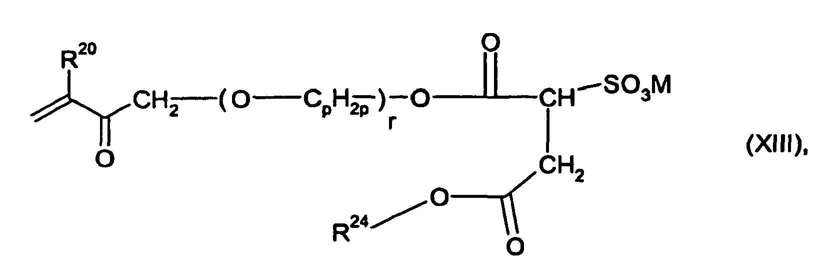 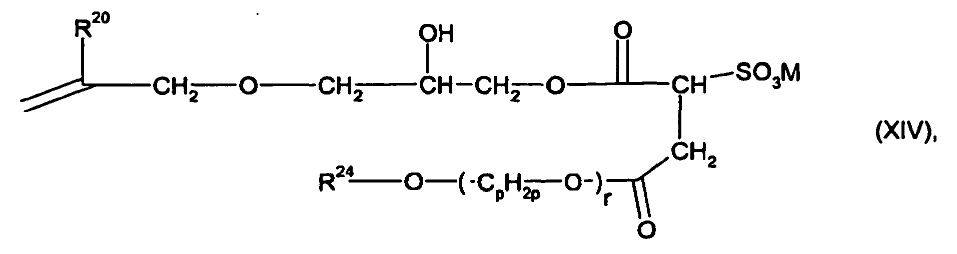 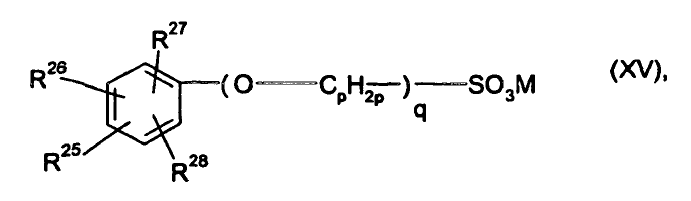 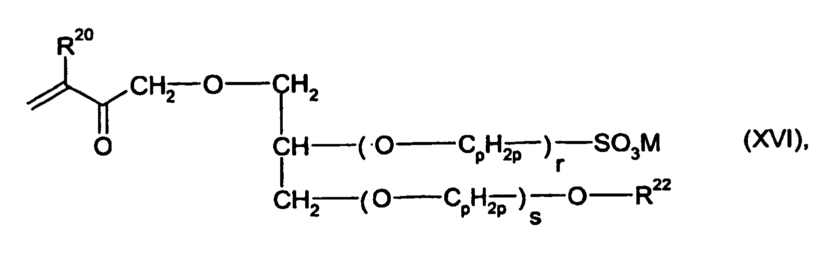 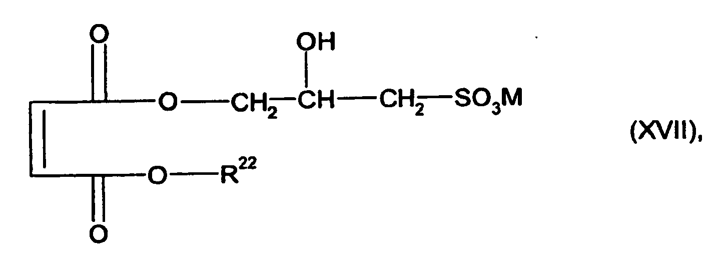 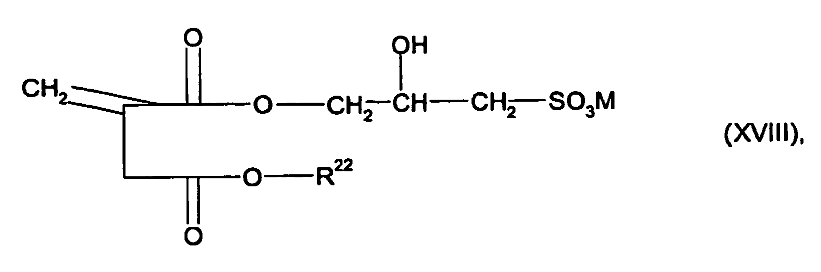 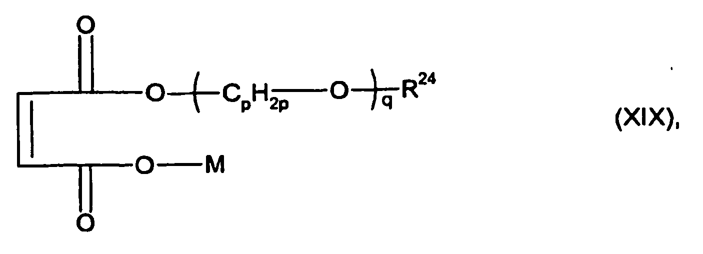 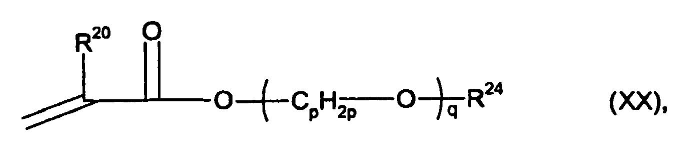 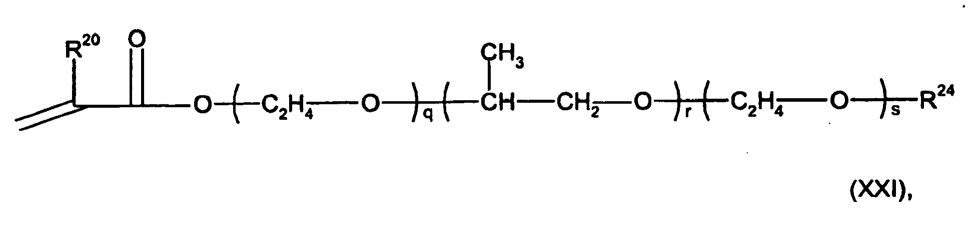 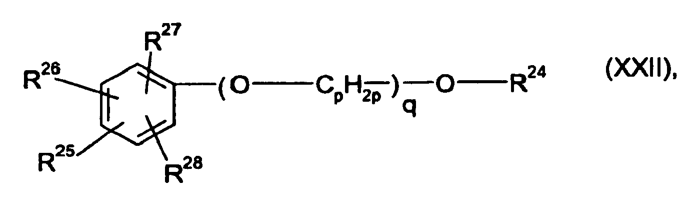 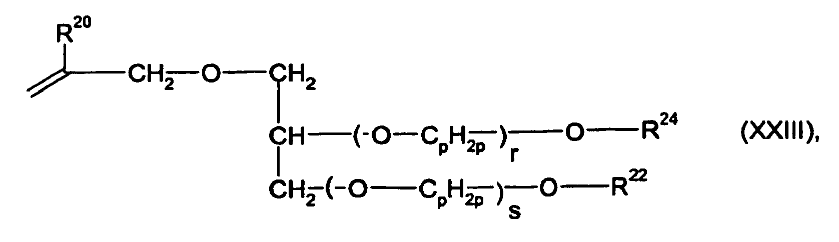 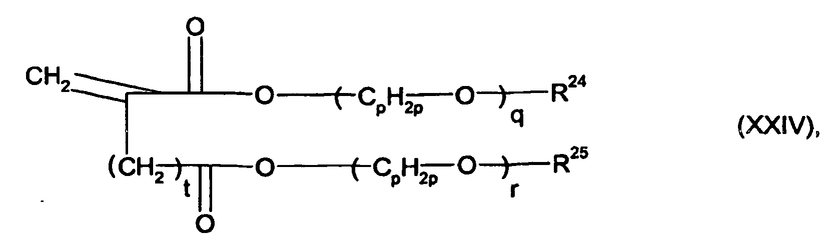 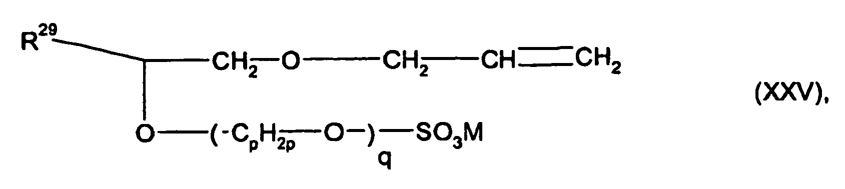 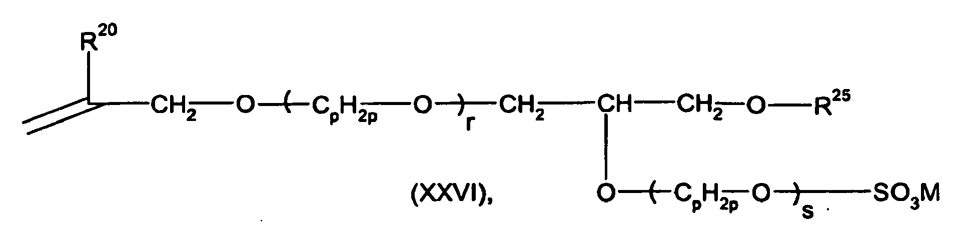 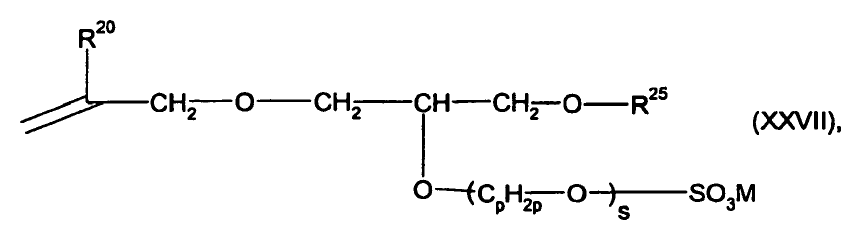 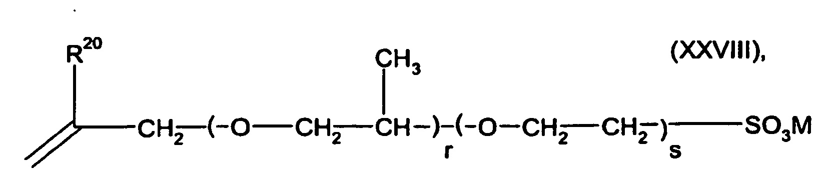 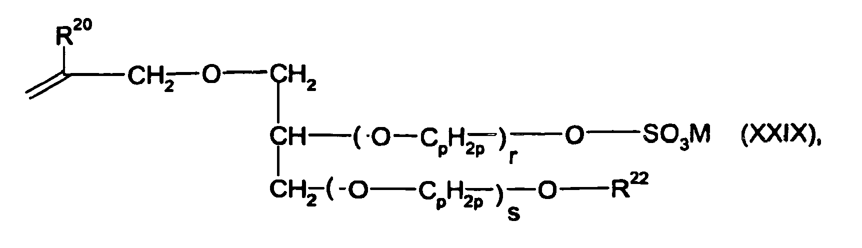 CH₂=CH-O-CᵤH₂ᵤ-O-(C₃H₆-O-)ᵥ(C₂H₄-O-)_{w}-R³⁰ (XXX),
CH₂=CH-CH₂-O-(C₃H₆-O-)ᵥ(C₂H₄-O-)_{w}-R³⁰ (XXXI),
CH₂=CH-CH₂-O-(C₃H₆-O-)ᵥ(C₂H₄-O-)_{w}-SO₃M (XXXII),
[R³¹-O-(C₃H₆-O-)ᵥ(C₂H₄-C)_{w}]ₜ-R³² (XXXIII),
worin R²⁰ und R²¹ unabhängig voneinander Wasserstoff oder C₁-C₄-Alkyl, vorzugsweise Wasserstoff oder Methyl, bedeuten,
R²² C₆-C₃₀-Alkyl, C₆-C₃₀-Alkenyl oder C₇-C₃₀-Alkylaryl ist, vorzugsweise C₈-C₂₄-Alkyl,
M ein Alkalimetallkation, ein Ammoniumion oder Wasserstoff bedeutet, vorzugsweise ein Natriumion oder ein Ammoniumion,
R²⁵, R²⁶ und R²⁷ unabhängig voneinander Wasserstoff, C₁-C₃₀-Alkyl, C₂-C₃₀-Alkenyl, Cycloalkyl, Aryl, oder Acyl bedeuten, vorzugsweise Wasserstoff, C₁-C₂₄-Alkyl oder C₂-C₄-Alkenyl,
n und m unabhängig voneinander ganze Zahlen von 1 bis 4 sind, vorzugsweise 2,
p eine ganze Zahl von 2 bis 4 bedeutet, vorzugsweise 2,
q eine ganze Zahl von 1 bis 100 bedeutet, vorzugsweise von 4 bis 20,
R²⁴ Wasserstoff, C₁-C₃₀-Alkyl, C₂-C₃₀-Alkenyl, Cycloalkyl, Aryl, oder Acyl bedeutet, vorzugsweise C₁-C₁₈-Alkyl,
r eine ganze Zahl von 0 bis 100 ist, vorzugsweise von 2 bis 20,
R²⁸ C₂-C₄-Alkenyl bedeutet, vorzugsweise Vinyl, Allyl oder Methylvinyl,
s eine ganze Zahl von 0 bis 100 ist, vorzugsweise von 2 bis 20,
t 1 oder 2 bedeutet,
R²⁹ C₁-C₃₀-Alkyl bedeutet, vorzugsweise C₁-C₄-Alkyl,
u eine ganze Zahl von 1 bis 20 ist, vorzugsweise von 2 bis 10,
v und w unabhängig voneinander ganze Zahlen von 0 bis 100 sind, vorzugsweise von 2 bis 20, wobei mindestens eine der Zahlen v oder w ungleich null sind,
R³⁰ Wasserstoff oder C₁-C₄-Alkyl, vorzugsweise Wasserstoff oder Methyl, bedeutet,
R³¹ ein Alkenylrest oder ein Carboxyalkenylrest mit 6-30 Kohlenstoffatomen ist, und
R³² Wasserstoff, C₁-C₄-Alkyl oder ein Rest der Formel PO₄₋ₜM₃₋ₜ ist.

15. Zusammensetzung nach Anspruch 14, **dadurch gekennzeichnet, dass** Komponente D) sich ableitet von Verbindungen der Formel XVa 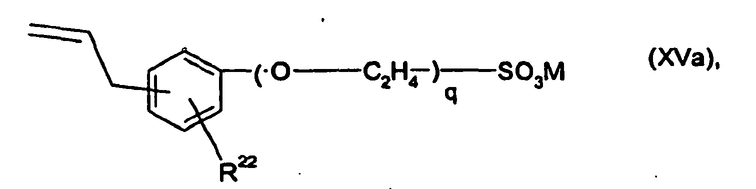 worin q, R²² und M die in Anspruch 14 definierte Bedeutung besitzt.

16. Zusammensetzung nach einem der Ansprüche 1 bis 15, **dadurch gekennzeichnet, dass** diese mindestens einen nichtionischen Emulgator enthält.

17. Verwendung der Zusammensetzung nach einem der Ansprüche 1 bis 16 enthaltend einen mineralischen Füllstoff, wobei der Anteil von Teilchen mit einem Durchmesser von mindestens 40 µm mindestens 40 Gew. % beträgt, als Putz.

18. Verwendung der Zusammensetzung nach einem der Ansprüche 1 bis 16 enthaltend einen mineralischen Füllstoff, wobei der mittlere Durchmesser der Teilchen 1 bis 40 µm beträgt, als Farbe, insbesondere als Fassadenfarbe oder als Dachsteinfarbe.

19. Verwendung von Kunststoffdispersionen enthaltend eine durch radikalische Emulsionspolymerisation hergestellte wässrige Polymerdispersionen abgeleitet von den Monomeren A), B), C), gegebenenfalls D) und gegebenenfalls E) nach Anspruch 1 sowie kolloidales Siliziumdioxid in Putzen oder in Farben.

20. Wässerige Kunststoffdispersion enthaltend
a) ein durch Emulsionspolymerisation hergestelltes Copolymer, das sich ableitet von
A) mindestens 40 Gew. %, bezogen auf die Gesamtmonomermenge, von Vinylestern gesättigter Carbonsäuren, gegebenenfalls vinylaromatischen Monomeren und/oder gegebenenfalls Estern α, β-ungesättigter Carbonsäuren,
B) 0,1 bis 10 Gew. %, bezogen auf die Gesamtmonomermenge, von α, β-ethylenisch ungesättigten Mono- und/oder Dicarbonsäuren, und/oder von α, β-ethytenisch ungesättigten Sulfonsäuren und/oder von α, β-ethylenisch ungesättigten Phosphorsäuren und/oder von α, β-ethylenisch ungesättigten Phosphonsäuren und/oder von Amiden von α, β-ethylenisch ungesättigten Mono- und/oder Dicarbonsäuren,
C) 0,5 bis 15 Gew. %, bezogen auf die Gesamtmonomermenge, von ethylenisch ungesättigten Monomeren, welche mindestens eine Alkoxysilylgruppe aufweisen,
D) gegebenenfalls bis zu 10 Gew. %, bezogen auf die Gesamtmonomermenge, eines ethlyenisch ungesättigten Monomeren, das eine anionische und/oder nichtionische emulgierende Gruppe enthält, und
E) gegebenenfalls bis zu 20 Gew. %, bezogen auf die Gesamtmonomermenge, von mit den Monomeren der Gruppen A), B), C) und gegebenenfalls D) copolymerisierbaren sonstigen Monomeren, mit der Maßgabe, dass
anstelle oder zusätzlich zur Copolymerisation des Monomeren C) nach der Emulsionspolymerisation 0,5 bis 15 Gew. %, bezogen auf die Gesamtmonomermenge, eines Monomeren zugegeben wird, das neben mindestens einer Alkoxysilylgruppe mindestens eine Amino-, Merkapto- oder Epoxidgruppe aufweist, und
b) kolloidales Siliciumdioxid.

21. Wässerige Kunststoffdispersion nach Anspruch 20, **dadurch gekennzeichnet, dass** sich dieses von Monomeren A), B), C), D) und gegebenenfalls E) ableitet.

22. Wässerige Kunststoffdispersion nach einem der Ansprüche 20 bis 21,
**dadurch gekennzeichnet, dass** als Monomere A) folgende Monomergemische eingesetzt werden: Vinylacetat/Vinylchlorid/Ethen, Vinylacetat/Vinyllaurat/- Ethen, Vinylacetat/Versaticsäurevinylester/2-Ethylhexylacrylat, Vinylacetat/Vinyllaurat/-Ethen/Vinylchlorid, Vinylacetat/Versaticsäurevinylester/-Ethen/Vinylchlorid, Versaticsäurevinylester/Ethen/Vinylchlorid, Vinylacetat/-Versaticsäurevinylester, Vinylacetat/Versaticsäurevinylester/- Ethen und Vinylacetat/Ethen, wobei die Kombination Vinylacetat/Ethen besonders bevorzugt ist.

## Claims

1. A composition containing
a) mineral filler, the proportion of particles having a diameter of at least 40 µm being at least 40% by weight, or mineral filler, the mean diameter of the particles being from 1 to 40 µm, the filler having a refractive index less than 1.75,
b) pigment which has a refractive index greater than or equal to 1.75,
c) colloidal silica and
d) aqueous plastics dispersion which contains a copolymer which is prepared by emulsion polymerization and is derived from
A) at least 40% by weight, based on the total amount of monomer, of esters of α,β-unsaturated carboxylic acids, vinyl esters of saturated carboxylic acids, vinylaromatic monomers or combinations of two or more of these monomers,
B) from 0.1 to 10% by weight, based on the total amount of monomers, of α,β-ethylenically unsaturated mono- and/or dicarboxylic acids and/or of α,β-ethylenically unsaturated sulfonic acids and/or of α,β-ethylenically unsaturated phosphoric acids and/or of α,β-ethylenically unsaturated phosphonic acids and/or of amides of α,β-ethylenically unsaturated mono- and/or dicarboxylic acids,
C) from 0.5 to 15% by weight, based on the total amount of monomers, of ethylenically unsaturated monomers which have at least one alkoxysilyl group,
D) from 0.1 to 10% by weight, based on the total amount of monomers, of an ethylenically unsaturated surface-active monomer containing at least one anionic and/or nonionic emulsifying group and
E) optionally up to 20% by weight, based on the total amount of monomers, of other monomers copolymerizable with the monomers of groups A), B), C) and D), with the proviso that,
instead of or in addition to the copolymerization of the monomer C), from 0.5 to 15% by weight, based on the total amount of monomers, of a monomer which has at least one amino, mercapto or epoxide group in addition to at least one alkoxysilyl group is added after the emulsion polymerization.

2. The composition as claimed in claim 1, which additionally contains e) water-soluble silicate and/or f) silicone resin.

3. The composition as claimed in either of claims 1 and 2, which contains a mineral filler a), the proportion of particles having a diameter of at least 40 µm being at least 40% by weight, and this filler is present in an amount of from 50 to 80% by weight, based on the total formulation.

4. The composition as claimed in either of claims 1 and 2, which contains a mineral filler a), the mean diameter of the particles being from 1 to 40 µm, and this filler is present in an amount of from 20 to 60% by weight, based on the total formulation.

5. The composition as claimed in any of claims 1 to 4, wherein the mineral filler a) is calcium carbonate, quartz and/or a silicate filler, in particular mica or feldspar.

6. The composition as claimed in any of claims 1 to 5, wherein the pigment b) is titanium dioxide, iron oxide, zinc oxide and/or a phthalocyanine pigment and is present in an amount of from 1 to 50% by weight, based on the total formulation.

7. The composition as claimed in any of claims 1 to 6, wherein the colloidal silica c) has a mean diameter of from 2 to 100 nm and is present in an amount of from 5 to 200% by weight, based on the amount of the copolymer.

8. The composition as claimed in any of claims 2 to 7, wherein the water-soluble silicate is alkali waterglass, in particular sodium waterglass or potassium waterglass.

9. The composition as claimed in any of claims 2 to 8, wherein the silicone resin is a polydimethylsiloxane.

10. The composition as claimed in any of claims 1 to 9, wherein component A) is an acrylate and/or a methacrylate, optionally in combination with styrene.

11. The composition as claimed in any of claims 1 to 9, wherein component A) is a vinyl ester of a saturated carboxylic acid having one to four carbon atoms, preferably vinyl acetate.

12. The composition as claimed in any of claims 1 to 11, wherein component B) is acrylic acid, methacrylic acid or vinylsulfonic acid.

13. The composition as claimed in any of claims 1 to 12, wherein component C) is vinyltrialkoxysilane, preferably vinyltrimethoxy- or vinyltriethoxysilane.

14. The composition as claimed in any of claims 1 to 13, wherein component D) is derived from compounds of the formulae X, XI, XII, XIII, XIV, XV, XVI, XVII, XVIII, XIX, XX, XXI, XXII, XXIII, XXIV, XXV, XXVI, XXVII, XXVIII, XXIX, XXX, XXXI, XXXII and XXXIII 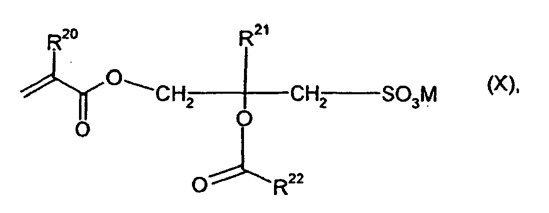 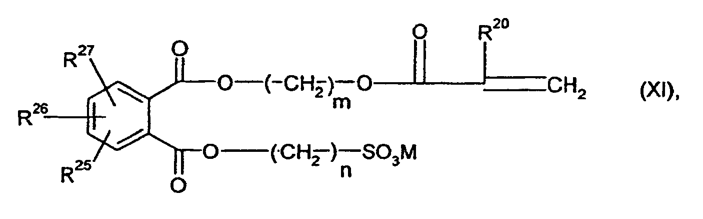 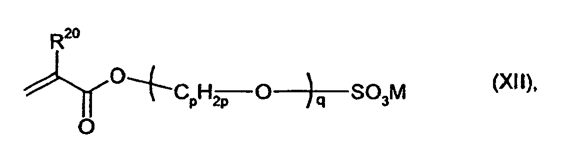 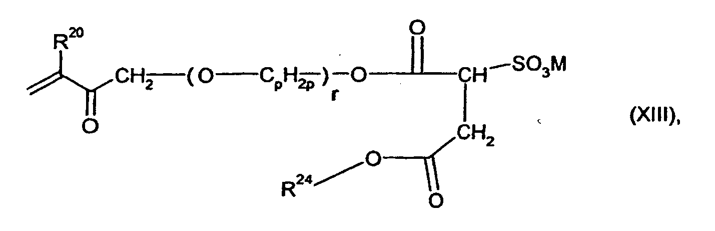 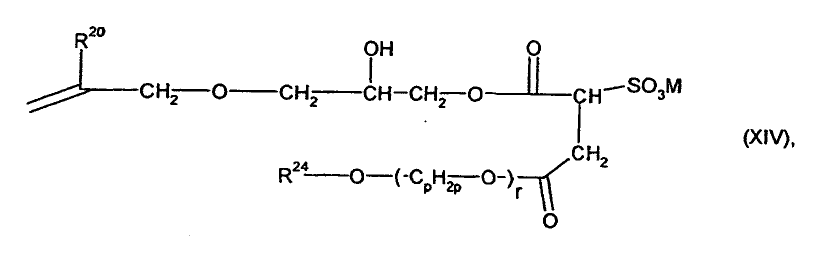 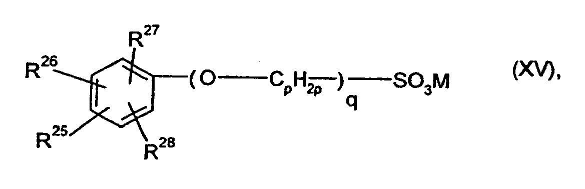 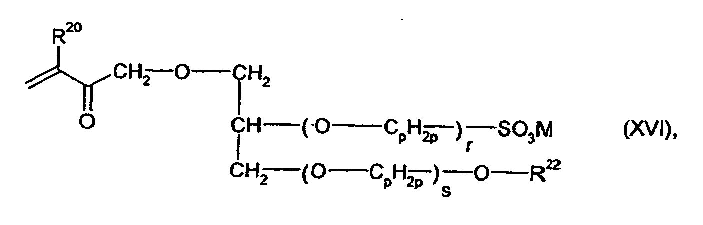 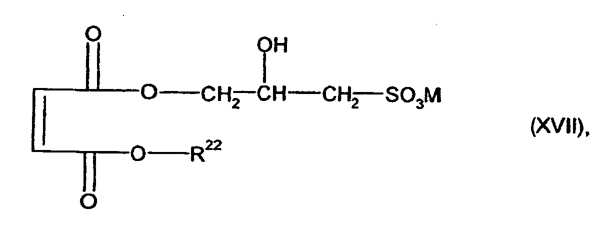 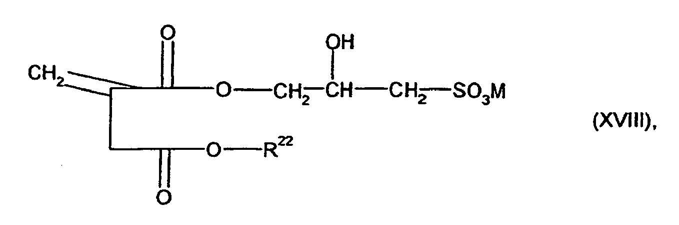 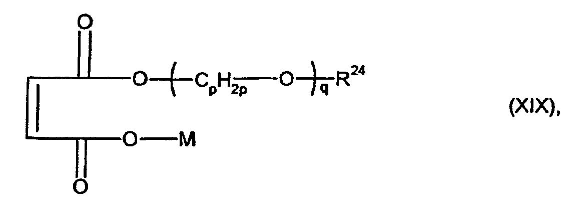 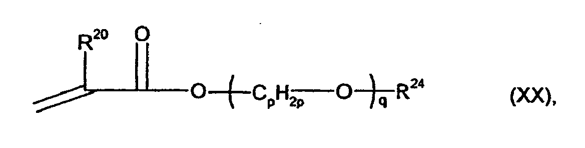 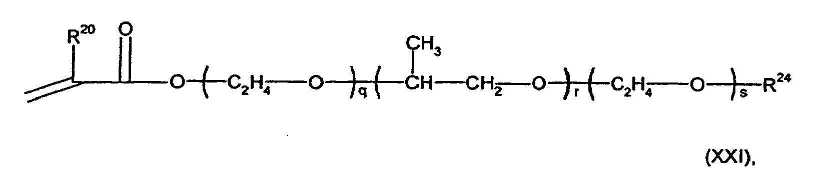 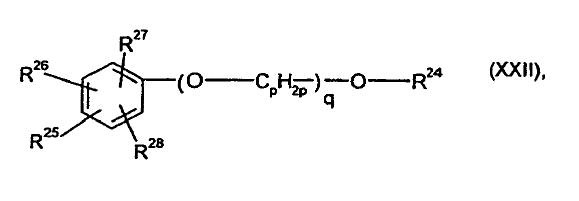 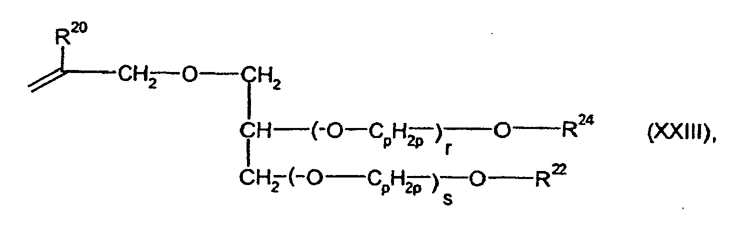 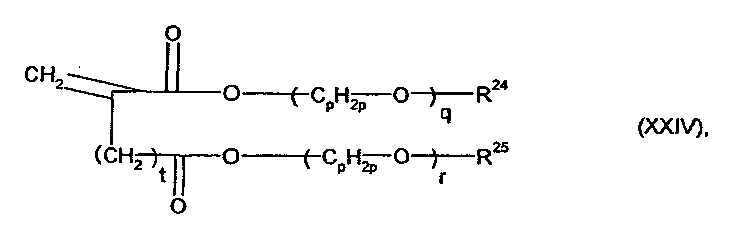 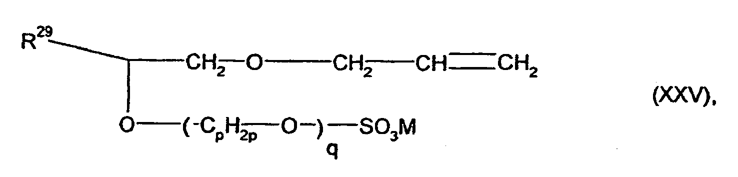 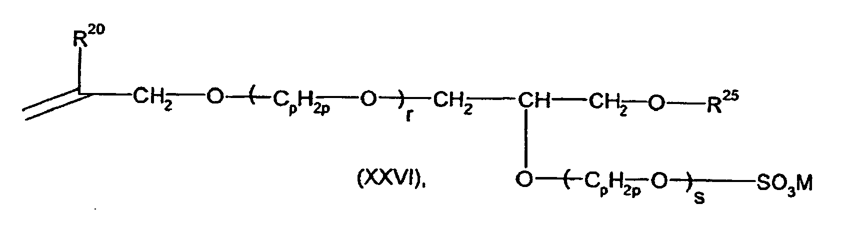 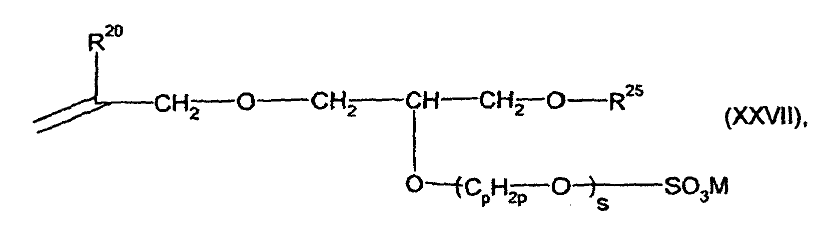 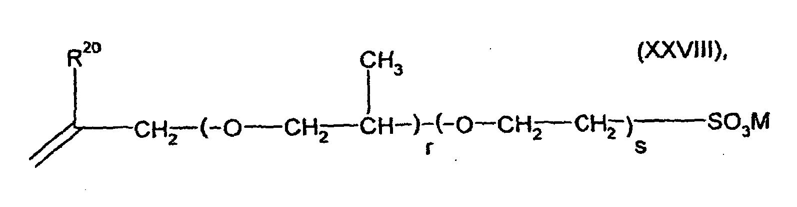 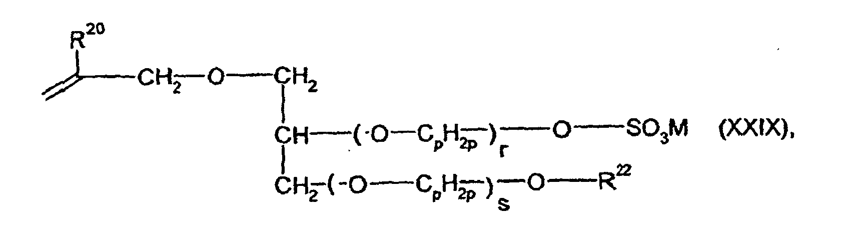
CH₂=CH-O-CᵤH₂ᵤ-O-(C₃H₆-O-)ᵥ(C₂H₄-O-)_{w}-R³⁰ (XXX),
CH₂=CH-CH₂-O-(C₃H₆-O-)ᵥ(C₂H₄-O-)_{w}-R³⁰ (XXXI),
CH₂=CH-CH₂-O-(C₃H₆-O-)ᵥ(C₂H₄-O-)_{w}-SO₃M (XXXII),
[R³¹-O-(C₃H₆-O-)ᵥ(C₂H₄-C)_{w}]ₜ-R³² (XXXIII),
in which R²⁰ and R²¹, independently of one another, are hydrogen or C₁-C₄-alkyl, preferably hydrogen or methyl,
R²² is C₆-C₃₀-alkyl, C₆-C₃₀-alkenyl or C₇-C₃₀-alkylaryl, preferably C₈-C₂₄-alkyl,
M is an alkali metal cation, an ammonium ion or hydrogen, preferably a sodium ion or an ammonium ion, R²⁵, R²⁶ and R²⁷, independently of one another, are hydrogen, C₁-C₃₀-alkyl, C₂-C₃₀-alkenyl, cycloalkyl, aryl or acyl, preferably hydrogen, C₁-C₂₄-alkyl or C₂-C₄-alkenyl,
n and m, independently of one another, are integers from 1 to 4, preferably 2,
p is an integer from 2 to 4, preferably 2,
q is an integer from 1 to 100, preferably from 4 to 20,
R²⁴ is hydrogen, C₁-C₃₀-alkyl, C₂-C₃₀-alkenyl, cycloalkyl, aryl or acyl, preferably C₁-C₁₈-alkyl,
r is an integer from 0 to 100, preferably from 2 to 20,
R²⁸ is C₂-C₄-alkenyl, preferably vinyl, allyl or methylvinyl,
s is an integer from 0 to 100, preferably from 2 to 20,
t is 1 or 2,
R²⁹ is C₁-C₃₀-alkyl, preferably C₁-C₄-alkyl,
u is an integer from 1 to 20, preferably from 2 to 10,
v and w, independently of one another, are integers from 0 to 100, preferably from 2 to 20, at least one of the numbers v or w not being equal to zero,
R³⁰ is hydrogen or C₁-C₄-alkyl, preferably hydrogen or methyl,
R³¹ is an alkenyl radical or a carboxyalkenyl radical having 6 to 30 carbon atoms and
R³² is hydrogen, C₁-C₄-alkyl or a radical of the formula PO₄₋ₜM₃₋ₜ.

15. The composition as claimed in claim 14, wherein component D) is derived from compounds of the formula XVa 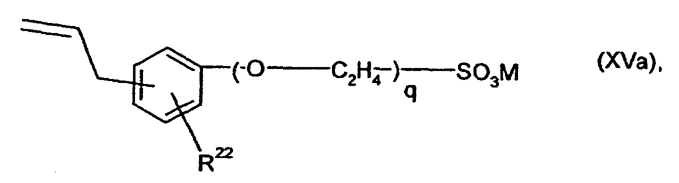 in which q, R²² and M has the meaning defined in claim 14.

16. The composition as claimed in any of claims 1 to 15, which contains at least one nonionic emulsifier.

17. The use of the composition as claimed in any of claims 1 to 16 containing a mineral filler, the proportion of particles having a diameter of at least 40 µm being at least 40% by weight, as plaster and render.

18. The use of the composition as claimed in any of claims 1 to 16 containing a mineral filler, the mean diameter of the particles being from 1 to 40 µm, as paint, in particular as facade paint or as roofing tile paint.

19. The use of plastics dispersions containing an aqueous polymer dispersion prepared by free radical emulsion polymerization and derived from the monomers A), B), C), optionally D) and optionally E) as claimed in claim 1 and colloidal silica in plasters and renders or in paints.

20. Aqueous plastics dispersion containing
a) a copolymer which is prepared by emulsion polymerization and is derived from
A) at least 40% by weight, based on the total amount of monomers, of vinyl esters of saturated carboxylic acids, optionally vinylaromatic monomers and/or optionally esters of α,β-unsaturated carboxylic acids,
B) from 0.1 to 10% by weight, based on the total amount of monomers, of α,β-ethylenically unsaturated mono- and/or dicarboxylic acids and/or of α,β-ethylenically unsaturated sulfonic acids and/or of α,β-ethylenically unsaturated phosphoric acids and/or of α,β-ethylenically unsaturated phosphonic acids and/or of amides of α,β-ethylenically unsaturated mono- and/or dicarboxylic acids,
C) from 0.5 to 15% by weight, based on the total amount of monomers, of ethylenically unsaturated monomers which have at least one alkoxysilyl group,
D) optionally up to 10% by weight, based on the total amount of monomers, of an ethylenically unsaturated monomer which contains an anionic and/or nonionic emulsifying group and
E) optionally up to 20% by weight, based on the total amount of monomers, of other monomers copolymerizable with the monomers of groups A), B), C) and optionally D), with the proviso that,
instead of or in addition to the copolymerization of the monomer C), from 0.5 to 15% by weight, based on the total amount of monomers, of a monomer which has at least one amino,
mercapto or epoxide group in addition to at least one alkoxysilyl group is added after the emulsion polymerization, and
b) colloidal silica.

21. The aqueous plastics dispersion as claimed in claim 20, which is derived from monomers A), B), C), D), and optionally E).

22. The aqueous plastics dispersion as claimed in either of claims 20 and 21, wherein the following monomer mixtures are used as monomers A): vinyl acetate/vinyl chloride/ethene, vinyl acetate/vinyl laurate/ethene, vinyl acetate/vinyl versatate/2-ethylhexyl acrylate, vinyl acetate/vinyl laurate/ethene/vinyl chloride, vinyl acetate/vinyl versatate/ethene/vinyl chloride, vinyl versatate/ethene/vinyl chloride, vinyl acetate/vinyl versatate, vinyl acetate/vinyl versatate/ethene and vinyl acetate/ethene, the combination vinyl acetate/ethene being particularly preferred.

## Revendications

1. Composition contenant
a) une charge minérale, la proportion de particules avec un diamètre d'au moins 40 µm étant d'au moins 40 % en poids, ou une charge minérale dans laquelle le diamètre moyen des particules est de 1 à 40 µm, la charge ayant un indice de réfraction de moins de 1,75,
b) un pigment qui présente un indice de réfraction supérieur ou égal à 1,75,
c) du dioxyde de silicium colloïdal et
d) une dispersion aqueuse de plastique, laquelle contient un copolymère préparé par polymérisation en émulsion, qui dérive de
A) au moins 40 % en poids, rapportés à la quantité totale de monomère, d'esters d'acides carboxyliques insaturés en α-β, d'esters de vinyle d'acides carboxyliques saturés, de monomères vinyl-aromatiques ou de combinaison de deux ou plusieurs de ces monomères,
B) 0,1 à 10 % en poids, rapportés à la quantité totale de monomère, d'acides mono- et/ou dicarboxyliques éthyléniquement insaturés en α-β, et/ou d'acides sulfoniques éthyléniquement insaturés en α-β et/ou d'acides phosphoriques éthyléniquement insaturés en α-β et/ou d'acides phosphoniques éthyléniquement insaturés en α-β et/ou d'amides d'acides mono- et/ou dicarboxyliques éthyléniquement insaturés en α-β,
C) 0,5 à 15 % en poids, rapportés à la quantité totale de monomère, de monomères éthyléniquement insaturés qui comportent au moins groupe alcoxysilyle,
D) 0,1 à 10 % en poids, rapportés à la quantité totale de monomère, d'un monomère éthyléniquement insaturé tensioactif contenant au moins un groupe émulsifiant anionique et/ou non ionique et
E) le cas échéant jusqu'à 20 % en poids, rapportés à la quantité totale de monomère, de monomères divers copolymérisant avec les monomères des groupes A), B), C) et D), avec la condition que à la place ou en plus de la copolymérisation du monomère C), 0,5 à 15 % en poids, rapportés à la quantité totale de monomère, d'un monomère qui, outre au moins un groupe alcoxysilyle, comporte au moins un groupe amino, mercapto ou époxyde, sont ajoutés après la polymérisation en émulsion.

2. Composition selon la revendication 1, **caractérisée en ce que** celle-ci contient en plus un silicate soluble dans l'eau e) et/ou une résine silicone f).

3. Composition selon l'une quelconque des revendications 1 à 2, **caractérisée en ce que** celle-ci contient une charge minérale a) sachant que la proportion de particules avec un diamètre d'au moins 40 µm est d'au moins 40 % en poids, et **en ce que** cette charge est présente en une quantité de 50 à 80 % en poids, rapportée à la formulation totale.

4. Composition selon l'une quelconque des revendications 1 à 2, **caractérisée en ce que** celle-ci contient une charge minérale a), le diamètre moyen des particules étant de 1 à 40 µm, et **en ce que** cette charge est présente en une quantité de 20 à 60 % en poids, rapportée à la formulation totale.

5. Composition selon l'une quelconque des revendications 1 à 4, **caractérisée en ce que** la charge minérale a) est du carbonate de calcium, du quartz et/ou une charge de silicate, en particulier du mica ou du feldspath.

6. Composition selon l'une quelconque des revendications 1 à 5, **caractérisée en ce que** le pigment b) est du dioxyde de titane, de l'oxyde de fer, de l'oxyde de zinc et/ou un pigment de phtalocyanine et est présent en une quantité de 1 à 50 % en poids, rapportée à l'ensemble de la formulation.

7. Composition selon l'une quelconque des revendications 1 à 6, **caractérisée en ce que** le dioxyde de silicium colloïdal c) a un diamètre de particule moyen de 2 à 100 nm et est présent en une quantité de 5 à 200 % en poids, rapportée à la quantité du copolymère.

8. Composition selon l'une quelconque des revendications 2 à 7, **caractérisée en ce que** le silicate soluble dans l'eau est du verre soluble alcalin, en particulier du verre soluble sodique ou du verre soluble potassique.

9. Composition selon l'une quelconque des revendications 2 à 8, **caractérisée en ce que** la résine silicone est du polydiméthylsiloxane.

10. Composition selon l'une quelconque des revendications 1 à 9, **caractérisée en ce que** le composant A) est un ester de l'acide acrylique et/ou un ester de l'acide méthacrylique, le cas échéant en combinaison avec du styrène.

11. Composition selon l'une quelconque des revendications 1 à 9, **caractérisée en ce que** le composant A) est un ester vinylique d'un acide carboxylique saturé avec un à quatre atomes de carbone, de préférence de l'acétate de vinyle.

12. Composition selon l'une quelconque des revendications 1 à 11, **caractérisée en ce que** le composant B) est de l'acide acrylique, de l'acide méthacrylique ou de l'acide vinylsulfonique.

13. Composition selon l'une quelconque des revendications 1 à 12, **caractérisée en ce que** le composant C) est un vinyl-trialcoxysilane, de préférence du vinyl-triméthoxysilane ou du vinyl-triéthoxysilane.

14. Composition selon l'une quelconque des revendications 1 à 13, **caractérisée en ce que** le composant D) dérive de composés des formules générales X, XI, XII, XIII, XIV, XV, XVI, XVII, XVIII, XIX, XX, XXI, XXII, XXIII, XXIV, XXV, XXVI, XXVII, XXVIII, XXIX, XXX, XXXI, XXXII et XXXIII 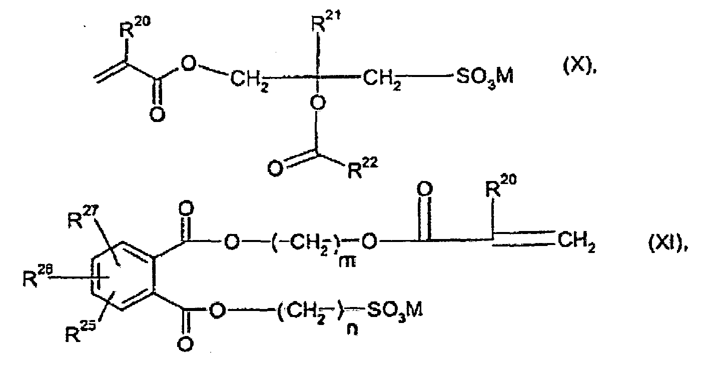 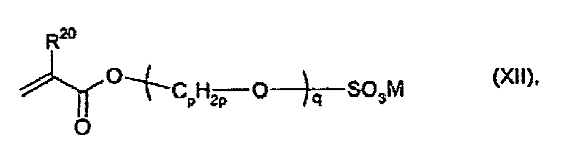 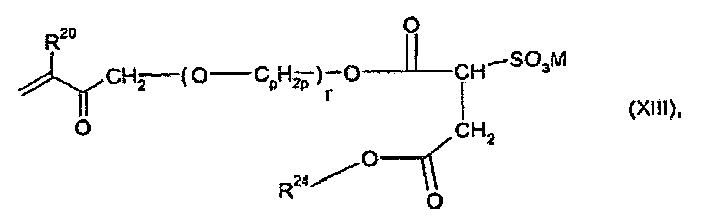 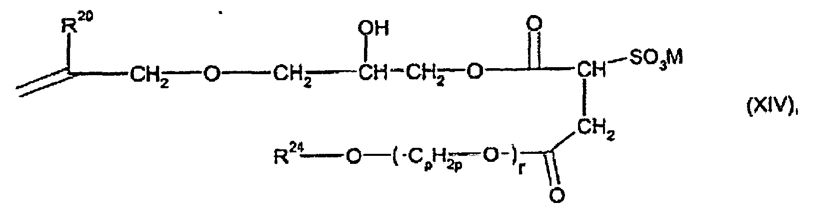 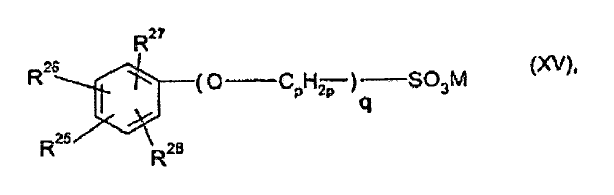 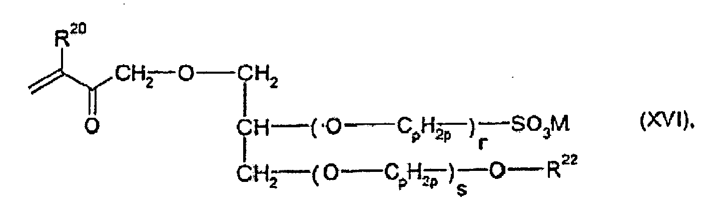 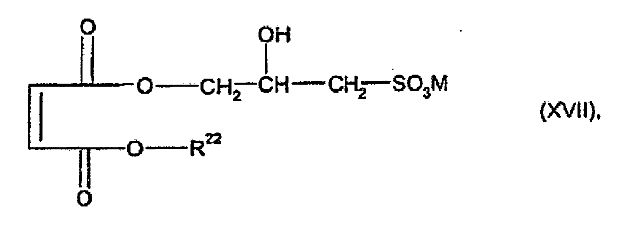 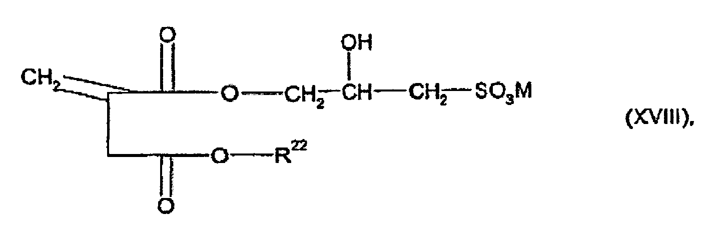 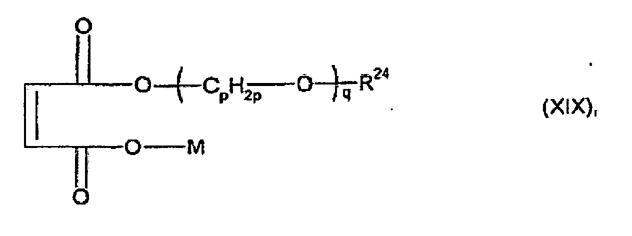 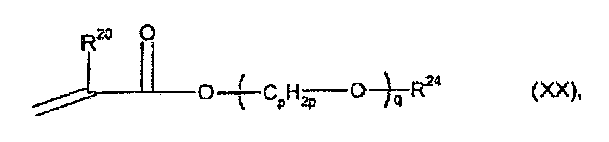 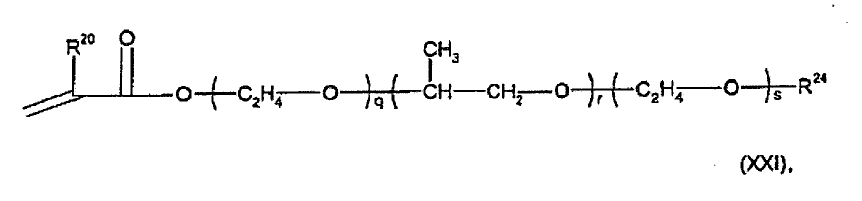 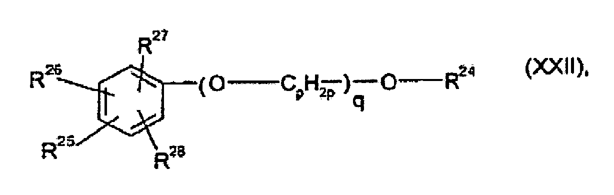 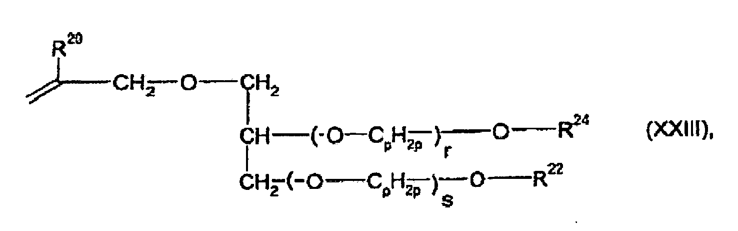 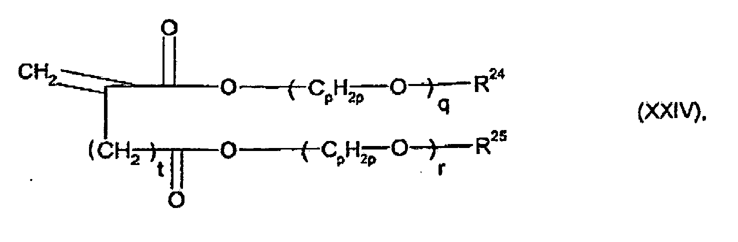 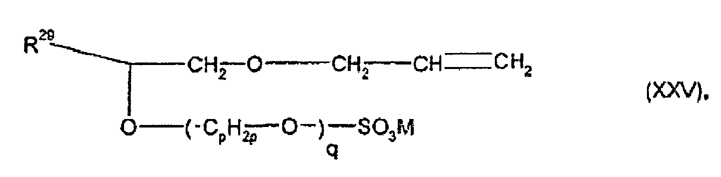 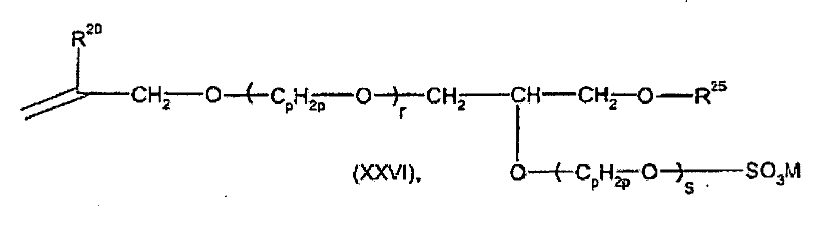 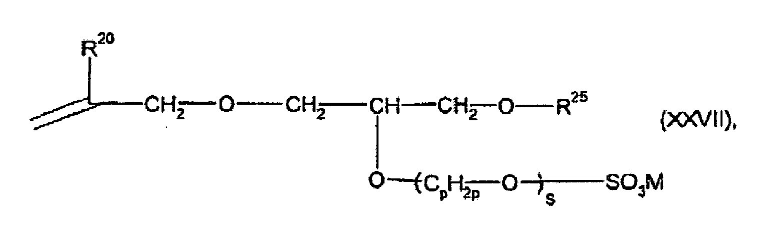 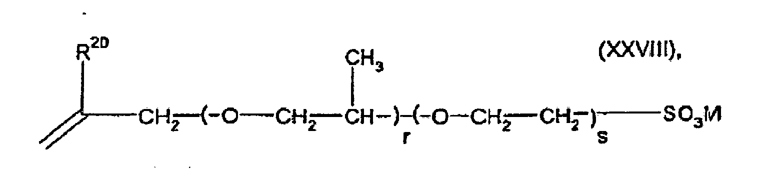 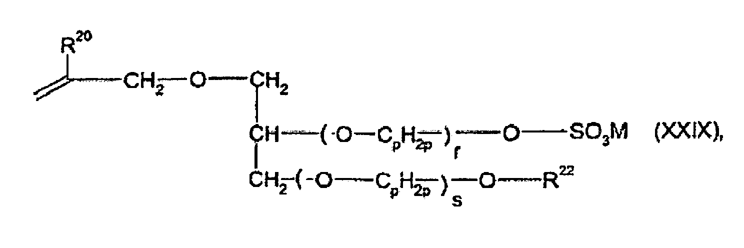 CH₂=CH-O-CᵤH₂ᵤ-O-(C₃H₆-O-)ᵥ(C₂H₄-O-)_{w}-R³⁰ (XXX),
CH₂=CH-CH₂-O-(C₃H₆-O-)ᵥ(C₂H₄-O-)_{w}-R³⁰ (XXXI),
CH₂=CH-CH₂-O-(C₃H₅-O-)ᵥ(C₂H₄-O-)_{w}-SO₃M (XXXII),
[R³¹-O-(C₃H₆-O-)ᵥ(C₂H₄-O-)_{w}]ₜ-R³² (XXXIII),
dans lesquelles R²⁰ et R²¹ signifient indépendamment l'un de l'autre un hydrogène ou un alkyle en C₁ à C₄, de préférence un hydrogène ou un méthyle,
R²² est un alkyle en C₆ à C₃₀, un alcényle en C₆ à C₃₀ ou un alkylaryle en C₇ à C₃₀, de préférence un alkyle en C₈ à C₂₄,
M signifie un cation d'un métal alcalin, un ion ammonium ou un hydrogène, de préférence un ion sodium ou un ion ammonium,
R²⁵, R²⁶ et R²⁷ signifient indépendamment les uns des autres un alkyle en C₁ à C₃₀, un alcényle en C₂ à C₃₀, un cycloalkyle, un aryle ou un acyle, de préférence un hydrogène ou un alkyle en C₁ à C₂₄ ou un alcényle en C₂ à C₄,
n et m sont indépendamment l'un de l'autre des nombres entiers de 1 à 4, de préférence 2,
p signifie un nombre entier de 2 à 4, de préférence 2,
q signifie un nombre entier de 0 à 100, de préférence de 4 à 20,
R²⁴ signifie un hydrogène, un alkyle en C₁ à C₃₀, un alcényle en C₂ à C₃₀, un cycloalkyle, un aryle ou un acyle, de préférence un alkyle en C₁ à C₁₈,
r est un nombre entier de 0 à 100, de préférence de 2 à 20,
R²⁸ signifie un alcényle en C₂ à C₄, de préférence un vinyle, un allyle ou un méthylvinyle,
s est un nombre entier de 0 à 100, de préférence de 2 à 20,
t signifie 1 ou 2,
R²⁹ signifie un alkyle en C₁ à C₃₀, de préférence un alkyle en C₁ à C₄,
u est un nombre entier de 1 à 20, de préférence de 2 à 10,
v et w sont, indépendamment l'un de l'autre, des nombres entiers de 0 à 100, de préférence de 2 à 20, sachant qu'au moins un des nombres v ou w est différent de zéro,
R³⁰ signifie un hydrogène ou un alkyle en C₁ à C₄, de préférence un hydrogène ou un méthyle,
R³¹ est un radical alcényle ou un radical carboxyalcényle avec 6 à 30 atomes de carbone et
R³² est un hydrogène, un alkyle en C₁ à C₄ ou un radical de la formule PO₄₋ₜM₃₋ₜ.

15. Composition selon la revendication 14, **caractérisée en ce que** le composant D) dérive de composés de la formule XVa 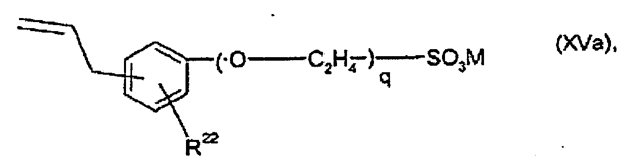 dans laquelle q, R²² et M ont les signification définies dans la revendication 14.

16. Composition selon l'une quelconque des revendications 1 à 15, **caractérisée en ce que** celle-ci contient au moins un émulsifiant non ionique.

17. Utilisation de la composition selon l'une quelconque des revendications 1 à 16, contenant une charge minérale, sachant que la proportion de particules avec un diamètre d'au moins 40 µm est de 40 % en poids, comme enduit.

18. Utilisation de la composition selon l'une quelconque des revendications 1 à 16, contenant une charge minérale, sachant que le diamètre moyen des particules est de 1 à 40 µm, comme peinture, en particulier comme peinture de façades ou comme peinture de tuiles.

19. Utilisation de dispersions de plastique contenant une dispersion aqueuse de polymères préparée par polymérisation radicalaire en émulsion, dérivée des monomères A), B), C), le cas échéant D) et le cas échéant E) selon la revendication 1, ainsi que du dioxyde de silicium colloïdal dans des enduits ou dans des peintures.

20. Dispersion aqueuse de plastique contenant
a) un copolymère préparé par polymérisation en émulsion, qui dérive de
A) au moins 40 % en poids, rapportés à la quantité totale de monomère, d'esters de vinyle d'acides carboxyliques saturés, le cas échéant de monomères vinyl-aromatiques et/ou le cas échéant d'esters d'acides gras carboxyliques insaturés en α-β,
B) 0,1 à 10 % en poids, rapportés à la quantité totale de monomère, d'acides mono- et/ou dicarboxyliques éthyléniquement insaturés en α-β, et/ou d'acides sulfoniques éthyléniquement insaturés en α-β et/ou d'acides phosphoriques éthyléniquement insaturés en α-β et/ou d'acides phosphoniques éthyléniquement insaturés en α-β et/ou d'amides d'acides mono- et/ou dicarboxyliques éthyléniquement insaturés en α-β,
C) 0,5 à 15 % en poids, rapportés à la quantité totale de monomère, de monomères éthyléniquement insaturés qui comportent au moins groupe alcoxysilyle,
D) le cas échéant jusqu'à 10 % en poids, rapportés à la quantité totale de monomère, d'un monomère éthyléniquement insaturé contenant au moins un groupe émulsifiant anionique et/ou non ionique et
E) le cas échéant jusqu'à 20 % en poids, rapportés à la quantité totale de monomère, de monomères divers copolymérisant avec les monomères des groupes A), B), C) et, le cas échéant, D), avec la condition que
à la place ou en plus de la copolymérisation du monomère C), 0,5 à 15 % en poids, rapportés à la quantité totale de monomère, d'un monomère qui, outre au moins un groupe alcoxysilyle, comporte au moins un groupe amino, mercapto ou époxyde, sont ajoutés après la polymérisation en émulsion, et
b) du dioxyde de silicium colloïdal.

21. Dispersion aqueuse de plastique selon la revendication 20, **caractérisée en ce que** celle-ci dérive des monomères A),B), C), D) et, le cas échéant, E).

22. Dispersion aqueuse de plastique selon l'une quelconque des revendications 20 à 21, **caractérisée en ce que**, comme monomères A), on utilise les mélanges des monomères suivants : acétate de vinyle/chlorure de vinyle/éthène, acétate de vinyle/laurate de vinyle/éthène, acétate de vinyle/ester de vinyle de l'acide versatique/2-éthylhexylacrylate, acétate de vinyle/laurate de vinyle/éthène/ chlorure de vinyle, acétate de vinyle/ester de vinyle de l'acide versatique/éthène/chlorure de vinyle, ester de vinyle de l'acide versatique/éthène/ chlorure de vinyle, acétate de vinyle/ester de vinyle de l'acide versatique, acétate de vinyle/ ester de vinyle de l'acide versatique/éthène et acétate de vinyle/éthène, la combinaison acétate de vinyle/éthène étant particulièrement préférée.
